(19) Europäisches Patentamt
European Patent Office
Office européen des brevets

(11) EP 1 653 541 B1

(12) **EUROPEAN PATENT SPECIFICATION**

(45) Date of publication and mention of the grant of the patent:
**11.05.2011 Bulletin 2011/19**

(21) Application number: **04771020.7**

(22) Date of filing: **29.07.2004**

(51) Int Cl.:
***H01M 8/02*** *(2006.01)* ***H01M 8/10*** *(2006.01)*
***C08J 5/22*** *(2006.01)* ***C08L 71/10*** *(2006.01)*
***C08G 65/40*** *(2006.01)* ***C08G 65/48*** *(2006.01)*

(86) International application number:
**PCT/JP2004/010807**

(87) International publication number:
**WO 2005/013399 (10.02.2005 Gazette 2005/06)**

(54) **ELECTROLYTE MEMBRANE-ELECTRODE ASSEMBLY, FUEL CELL USING SAME, AND METHOD FOR PRODUCING ELECTROLYTE MEMBRANE-ELECTRODE ASSEMBLY**

ELEKTROLYT-MEMBRAN-ELEKTRODEN-BAUGRUPPE, BRENNSTOFFZELLE DAMIT UND VERFAHREN ZUR HERSTELLUNG EINER ELEKTROLYT-MEMBRAN-ELEKTRODEN-BAUGRUPPE

ENSEMBLE ELECTRODE-MEMBRANE ELECTROLYTIQUE, PILE A COMBUSTIBLE METTANT EN APPLICATION CET ENSEMBLE ET PROCEDE SERVANT A LE FABRIQUER

(84) Designated Contracting States:
**AT BE BG CH CY CZ DE DK EE ES FI FR GB GR HU IE IT LI LU MC NL PL PT RO SE SI SK TR**

(30) Priority:
**31.07.2003 JP 2003204725**
**17.02.2004 JP 2004039238**
**26.02.2004 JP 2004050749**
**26.02.2004 JP 2004050750**
**26.02.2004 JP 2004050751**
**27.02.2004 JP 2004053385**
**27.02.2004 JP 2004053386**
**27.02.2004 JP 2004053388**

(43) Date of publication of application:
**03.05.2006 Bulletin 2006/18**

(73) Proprietor: **Toyo Boseki Kabushiki Kaisha**
**Osaka-shi,**
**Osaka 530-8230 (JP)**

(72) Inventors:
- **YAMASHITA, Masahiro,**
  **c/o TOYO BOSEKI KABUSHIKI**
  **Otsu-shi,**
  **Shiga 5200292 (JP)**
- **SAKAGUCHI, Yoshimitsu,**
  **c/o TOYO BOSEKI KABUSHIKI**
  **Otsu-shi,**
  **Shiga 5200292 (JP)**
- **TAKASE, Satoshi,**
  **c/o TOYO BOSEKI KABUSHIKI**
  **Otsu-shi,**
  **Shiga 5200292 (JP)**
- **KITAMURA, Kota,**
  **c/o TOYO BOSEKI KABUSHIKI**
  **Otsu-shi,**
  **Shiga 5200292 (JP)**

(74) Representative: **Müller-Boré & Partner**
**Patentanwälte**
**Grafinger Straße 2**
**81671 München (DE)**

(56) References cited:
**EP-A- 1 561 768**
**WO-A1-02/25764**
**JP-A- 1 129 023**
**JP-A- 7 268 114**
**JP-A- 8 020 716**
**JP-A- 11 007 969**
**JP-A- 11 067 224**
**JP-A- 2001 514 431**
**JP-A- 2002 502 539**
**JP-A- 2002 524 631**
**JP-A- 2004 129 779**
**US-A1- 2002 001 744**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 653 541 B1

## Description

The present invention relates to a method for producing an electrolyte membrane-electrode assembly.

In late years much attention has been focused on novel power generation techniques which are superior in energy efficiency or environmental friendliness. In particular, solid polymer fuel cells using solid polymer electrolyte membranes are characterized as exhibiting high energy density and being started and stopped more easily than fuel cells of other systems due to their lower operating temperature. Therefore, they are on development as generators for electric motorcars, dispersed power generation and the like. Among solid polymer fuel cells, direct methanol fuel cells, in which methanol is directly supplied as fuel, are under development for applications of power sources of personal computers and mobile instruments because they can be miniaturized.

As an electrolyte membrane in a solid polymer fuel cell, a membrane including proton conducting ion exchange resin is typically used. Electrolyte membranes are required to have characteristics such as fuel permeation inhibitability for inhibiting the permeation of fuel such as hydrogen and mechanical strength as well as the proton conductivity. As such an electrolyte membrane, for example, perfluorocarbon sulfonic acid polymer membranes in which sulfonic acid groups have been introduced, typified by Nafion (registered trademark) manufactured by E. I. du Pont de Nemours and Company, U.S.A., are known.

An electrolyte membrane-electrode assembly, which is a basic element of fuel cells, is constituted in a state where on both sides of a perfluorocarbon sulfonic acid polymer membrane, a pair of electrodes, namely, an anode catalyst layer film and a cathode catalyst layer film are joined, respectively. Both the anode catalyst layer film and the cathode catalyst layer film are composed of layers prepared by mixing a carbon powder on which surface, for example, platinum fine particles, which are catalyst, have been dispersed catalyst and proton-conducting perfluorocarbon sulfonic acid polymer.

As a typical method for producing an electrolyte membrane-electrode assembly is a method which comprises preparation of an item in which a layer of carbon on which platinum has been carried or a uniform mixture layer composed carbon on which an alloy of platinum and ruthenium has been carried and a perfluorocarbon sulfonic acid polymer, and thermal transfer of that onto a perfluorocarbon sulfonic acid polymer electrolyte membrane.

In the preparation of an electrolyte membrane-electrode assembly, the catalyst layers and the solid polymer electrolyte membrane are joined under proper conditions having no adverse effects on device performance through control of temperature, pressure and time. Specifically, it is possible to form a good electrolyte membrane-electrode assembly by pressing at a temperature near the glass transition temperature of the perfluorocarbon sulfonic acid polymer (for example, from 130 to 140°C for Nafion (registered trademark) under a pressure from 4 to 10 MPa for 1 to 5 minutes.

Electrolyte membranes in such electrolyte membrane-electrode assemblies, namely, perfluorocarbon sulfonic acid polymer membranes are used most widely because favorable cell performance can be obtained in a relatively small amount of sulfonic acid groups because of high acidity of the sulfonic acid groups included in the polymer and fluorine generates chemical stability. However, it becomes very expensive because the monomer cost is high, the control of polymer synthesis is difficult and the material to be used for manufacturing the plant is restricted. The high cost becomes an obstacle to their spread. In the application to direct methanol fuel cells using liquid fuel, for example methanol, as fuel, they have a drawback that they can not bring out the performance because of their high methanol permeability due to great affinity between fluorine and methanol. Thus, there is much activity to try to produce hydrocarbon-based solid polymer electrolyte membranes which are inexpensive and are of low methanol permeability.

Various types of hydrocarbon-based polymer electrolyte membranes in which sulfonic acid groups have been introduced in non-fluorine aromatic ring-containing polymers have been studied. Taking into account heat resistance and chemical stability, aromatic polyarylene ether compounds such as aromatic polyarylene ether ketones and aromatic polyarylene ether sulfones are considered as promising structures as a polymer backbone. Compounds resulting from sulfonation of polyaryl ether sulfone (see, for example, Non-Patent Document 1), compounds resulting from sulfonation of polyether ether ketone (see, for example, Non-Patent Document 1), sulfonated polystyrene, etc. have been reported. In addition, sulfonated polyaryl ether sulfone-based compounds have been reported (see, for example, Patent Document 2) which have been further improved in thermal stability through polymerization of monomers in which a sulfonic acid group has been introduced on the electron-withdrawing aromatic ring.

For such aromatic hydrocarbon-based polymers with improved heat resistance and chemical resistance, however, it is difficult to use the aforementioned method in which thermal bonding with electrodes is carried out at a temperature near the glass transition temperature, which is generally used for perfluorocarbon sulfonic acid polymer membranes. For example, in the case of sulfonated polyether ether ketone, the glass transition temperature is extremely higher than that of perfluorocarbon sulfonic acid polymer membranes (see, for example, Non-Patent Document 2), though it varies depending on the amount of sulfonic acid groups to be introduced. In such hydrocarbon-based polymers in which acidic functional groups, such as sulfonic acid groups, have been introduced, the heat resistance is improved because of their high glass transition temperature. It, however, is difficult to produce a favorable electrolyte membrane-electrode assemblies because the electrolyte membranes exhibit low adhesiveness. In addition, when joining at more elevated temperatures, the durability after fabrication into an electrolyte membrane-electrode assembly falls because the degradation of polymers is promoted. On the other hand, when the amount of sulfonic acid groups to be introduced is increased, the glass transition temperature is lowered, but it is insufficient. In addition to the effect of the glass transition temperature itself, strain tends to be generated and deformation occurs when the polymer is joined with electrodes. It, therefore, becomes more difficult to produce favorable electrolyte membrane-electrode assemblies. Moreover, when conditions associated with the joining with electrodes are made more strict, the deterioration in membrane characteristics will be promoted and the reliability and durability after fabrication into fuel cells will decrease because hydrocarbon-based polymers are inherently inferior in chemical stability in comparison to fluorine-containing polymers.

Patent Document 1: Japanese Patent Application Laid-Open No. 6-93114
Patent Document 2: U.S. Patent Application Laid-Open No. 2002/0091225 Specification (pages 1-2)
Patent Document 3: Japanese Patent No. 2884189 Specification
Patent Document 4: Japanese Patent Application Laid-Open No. 2003-217343
Patent Document 5: Japanese Patent Application Laid-Open No. 2003-217342
Non-Patent Document 1: R. Nolte and three authors, Journal of Membrane Science, Vol. 83 (1993) p. 211-220 (Netherlands)
Non-Patent Document 2: S.M.J. Zaidi and four coauthors, Journal of Membrane Science, Vol. 173 (2000) p. 17-34 (Netherlands)
Non-Patent Document 3: T. Kobayashi and three coauthors, Solid State Ionics, Vol. 106 (1998) p. 219 (U.S.A.)
Non-Patent Document 4: J. Lee and one coauthor, Journal of Polymer Science: Polymer Chemistry Edition, Vol. 22 (1984) p. 295 (U.S.A.)
Non-Patent Document 5: B.C. Johnson and six coauthors, Journal of Polymer Science: Polymer Chemistry Edition, 1984, Vol. 22 (1984) p.721 (U.S.A.)
Non-Patent Document 6: T. Ogawa and one coauthor, Journal of Polymer Science: Polymer Chemistry Edition, Vol. 23 (1985) p. 1231 (U.S.A.)
Non-Patent Document 7: B.S. Pivovar and five coauthors, AIChE Fuel Cell Technology: Opportunities and Challenges, p. 535 (2002) (U.S.A.)
Non-Patent Document 8: M. Hickner and one coauthor, The Electrochemical Society 203rd Meeting-Paris, Abs., No. 1169 (2003) (U.S.A.)
Non-Patent Document 9: J. Mecham and four coauthors, ACS Polymer Preprints, Vol. 41(2) (2000) p. 1388-1389 (U.S.A.)

The present invention was created under such situations and the object thereof is to provide a method for producing the electrolyte membrane-electrode assembly.

The method of the present invention is characterized by the embodiments outlined in the claims.

In the present invention, the method results in a product using an electrolyte membrane which is a hydrocarbon-based ion exchange membrane having an ion exchange capacity (IEC) within the range of from 1.0 to 3.0 meq/g and exhibits a conductivity, measured under an atmosphere at 80°C and 95% relative humidity, of 0.01 S/cm or more, and in which electrolyte membrane the water absorption at 80°C (W80°C), the water absorption at 25°C (W25°C) and the ion exchange capacity (IEC) satisfy the following formula (1):

$$(\mathrm{W80°C/W25°C}) \leq (\mathrm{ICE}) + 0.05 \quad \text{(formula (1))}$$

W80°C: water absorption (% by weight) at 80°C
W25°C: water absorption (% by weight) at 25°C
IEC: ion exchange capacity (meq/g)

In the electrolyte membrane-electrode assembly, it is also desirable that an electrolyte membrane be used that comprises a sulfonic acid group-containing hydrocarbon-based solid polymer compound which is a hydrocarbon-based solid polymer having a sulfonic acid group content (an ion exchange capacity based on the polymer structure) of 2.0 meq/g or more and which exhibits a moisture absorption (λ) defined as the number of water molecules per sulfonic acid group under an atmosphere at 80°C and 95% relative humidity of a value less than a relation (sulfonic acid group content) ×6 - 2. The ion exchange capacity based on the polymer structure referred to herein can be determined by chemical structure analysis using NMR or the like. When such methods can not be used, an ion exchange capacity determined by titration may be used instead.

In the electrolyte membrane-electrode assembly, it is further desirable that an electrolyte membrane be used

which is a hydrocarbon-based ion exchange membrane having an ion exchange capacity within the range of from 1.0 to 3.0 meq/g and exhibits a conductivity, measured under an atmosphere at 80°C and 95% relative humidity, of 0.01 S/cm or more and in which the water absorption at 80°C of the electrolyte membrane (W80°C) and the ion exchange capacity satisfy the following formula (2):

$$W80°C < 4.0 \times (IEC)^{5.1} \text{ (formula (2))}$$

W80°C: water absorption (% by weight) at 80°C
IEC: ion exchange capacity (meq/g)

Moreover, in the electrolyte membrane-electrode assembly, it is desirable to use an electrolyte membrane which is a hydrocarbon-based ion exchange membrane having an ion exchange capacity within the range of from 1.0 to 3.0 meq/g and exhibits a conductivity, measured under an atmosphere at 80°C and 95% relative humidity, of 0.01 S/cm or more, and in which electrolyte membrane the water absorption at 80°C (W80°C), the water absorption at 25°C (W25°C) and the ion exchange capacity satisfy the following formula (3):

$$(W80°C/W25°C) \leq 1.27 \times (ICE) - 0.78 \text{ (formula (3))}$$

W80°C: water absorption (% by weight) at 80°C
W25°C: water absorption (% by weight) at 25°C
IEC: ion exchange capacity (meq/g)

It is also desirable that the electrolyte membrane-electrode assembly be a product using an electrolyte membrane which is a hydrocarbon-based ion exchange membrane having an ion exchange capacity within the range of from 1.0 to 3.0 meq/g and exhibits a conductivity, measured under an atmosphere at 80°C and 95% relative humidity, of 0.01 S/cm or more, and in which electrolyte membrane the volume at 25°C and 65% relative humidity (V1), the volume after immersion in water at 25°C (V2) and the ion exchange capacity satisfy the following formula (4):

$$(V2/V1) \leq 1.05 \times (IEC) - 0.38 \text{ (formula (4))}$$

V1: volume ($cm^3$) at 25°C and 65% relative humidity
V2: volume ($cm^3$) in 25°C water
IEC: ion exchange capacity (meq/g)

It is also desirable that the electrolyte membrane-electrode assembly be a product using an electrolyte membrane which is a hydrocarbon-based ion exchange membrane having an ion exchange capacity within the range of from 1.0 to 3.0 meq/g and exhibits a conductivity, measured under an atmosphere at 80°C and 95% relative humidity, of 0.01 S/cm or more and in which the tensile breaking strength (DT) measured in 25°C water and the ion exchange capacity satisfy the following formula (5):

$$DT \geq 135 - 55 \times (IEC) \text{ (formula (5))}$$

DT: tensile breaking strength (MPa)
IEC: ion exchange capacity (meq/g)

It is also desirable that the electrolyte membrane-electrode assembly be a product using an electrolyte membrane which is a hydrocarbon-based ion exchange membrane composed of a substantially single compound and exhibits a tensile strength of 40 MPa or more under an atmosphere at 20°C and 65% relative humidity and also exhibits a tensile strength measured in 25°C water of 30 MPa or more.
Moreover, products are desirable which use an electrolyte membrane which is a hydrocarbon-based ion exchange membrane composed of a substantially single compound and exhibits a tensile strength of 40 MPa or more under an atmosphere at 20°C and 65% relative humidity and which exhibits a difference between the tensile elongation measured in 25°C water and the tensile elongation measured in an atmosphere at 20°C and 65% relative humidity of 150% or less.

Furthermore, it is desirable that the electrolyte membrane-electrode assembly be a product using an electrolyte membrane which is a non-perfluorocarbon sulfonic acid-based hydrocarbon-based ion exchange membrane for fuel cells using liquid fuel and which electrolyte membrane exhibits a difference of 20% or less between the methanol permeation coefficients measured before and after the immersion of the ion exchange membrane in a 5 mol/l aqueous solution of methanol for 20 hours. Furthermore, preferred is a product using an electrolyte membrane which has been subjected to a treatment of immersion in a solvent at a temperature of 80°C or higher.

It is desirable to use a poly(arylene ether)-based compound including a constituent represented by general formula (1) and a constituent represented by general formula (2) as the organic polymer forming the electrolyte membrane in each of the above-mentioned electrolyte membrane-electrode assemblies of the present invention:

[chem 1]

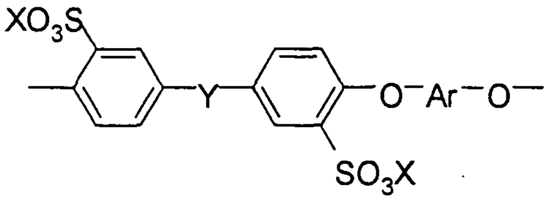

(1)

(in general formula (1), Ar represents a divalent aromatic group, Y represents sulfone group or a ketone group, and X represents H or a monovalent cationic group);

[chem 2]

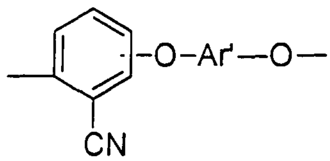

(2)

(in general Ar' represents a divalent aromatic group).

The present invention provides a method for producing an electrolyte membrane-electrode assembly by joining a hydrocarbon-based solid polymer electrolyte membrane and a pair of electrodes, wherein the hydrocarbon-based solid polymer electrolyte membrane is joined with the electrodes by hot pressing while the content of water contained in the hydrocarbon-based solid polymer electrolyte membrane is within the range of from 10 to 70% of the maximum water content of the hydrocarbon-based solid polymer electrolyte membrane.

In the method for producing an electrolyte membrane-electrode assembly of the present invention, it is desirable to provide the hydrocarbon-based solid polymer electrolyte membrane with moisture by holding the hydrocarbon-based solid polymer electrolyte membrane in an atmosphere where the humidity and/or the temperature is controlled.

Using the electrolyte membrane-electrode assembly produced according to the method of the present invention, it is possible to provide fuel cells using a hydrocarbon-based electrolyte membrane excellent in reliability and durability.

The present invention will be described in detail below.

As candidates of an electrolyte membrane having a thermal stability better than that of conventional perfluorosulfonic acid solid polymer electrolyte membranes, hydrocarbon-based solid polymers (hydrocarbon-based polymers) are under research. At the same time, electrolyte membrane-electrode assemblies using such hydrocarbon-based polymer electrolyte membranes are also studied. Taking into account heat resistance and chemical stability, aromatic poly (arylene ether) compounds, for example, seem to be promising as the aforementioned hydrocarbon-based solid polymer electrolyte. In the sense of improving the heat resistance, the polymer is required to have a glass transition temperature of 160°C or higher, preferably 200°C or higher, in a dry state because polymers having higher glass transition temperatures are preferred for preventing the deformation of polymers at high temperatures. Taking into account the effect on processability as an electrolyte membrane, e.g., the solubility, adhesiveness of a polymer, the glass transition temperature

of the electrolyte membrane for use in the present invention is desirably 400°C or lower, more desirably 350°C or lower, provided that if the decomposition temperature is lower than these temperatures, no glass transition temperature may be recognized in the range up to the decomposition temperature. The glass transition temperature referred to herein is a peak temperature of tanδ obtained through measurement of tanδ by setting a 5-mm-wide strip-shaped specimen in a dynamic viscoelasticity analyzer manufactured by UBM Co., Ltd. (model: Rheogel-E4000) so that the distance between chucks becomes 14 mm, drying the specimen in a dry nitrogen stream for four hours, and measuring tanδ in a tensile mode, at a frequency of 10 Hz and a strain of 0.7% in a nitrogen stream within a measurement temperature range of from 25 to 200°C at a temperature elevation rate of 2°C/min at 2°C measurement steps.

In order to activate fuel cells well, it is desirable that the electrolyte membrane be one in which protons can move easily. Because protons move by hopping or in hydrated form through utilization of acidic functional groups existing in an electrolyte membrane, an electrolyte membrane with an increased amount of acidic functional groups may be suitably employed in the electrolyte membrane-electrode assembly of the present invention. When the acidic functional groups are sulfonic acid groups, the content of the sulfonic acid groups in the electrolyte membrane is preferably within the range of from 0.3 to 3.5 meq/g, more preferably within the range of from 1.0 to 3.0 meq/g, where details will be described later. If the sulfonic acid group content is less than 0.3 meq/g, the membrane tends not to show a sufficient ion conductivity in its use as an ion conducting membrane. If the sulfonic acid group content is greater than 3.5 meq/g, the membrane tends to be unsuited for use because when an ion conducting membrane is placed under high temperature, high humidity conditions, the membrane will be swollen too much. The sulfonic acid group content can be determined, for example, by weighing an electrolyte membrane dried in nitrogen atmosphere overnight, stirring it in an aqueous sodium hydroxide solution, and then measuring an ion exchange capacity (IEC) by back titration using an aqueous hydrochloric acid solution.

Because in such an electrolyte membrane water is held by acidic functional groups, the electrolyte membrane shows water retentivity. Because water works effectively when protons move, the characteristic of retaining water along with the aforesaid acidic functional groups is an important property. In the electrolyte membrane-electrode assembly, an electrolyte membrane with a maximum water content within the range of from 10% to 120% (preferably ranges from 20% to 45% and from 70% to 110%) is used. If the maximum water content is less than 10%, it is impossible to retain a sufficient amount of water in use as an electrolyte membrane, resulting in a defect of showing no ion conductivity. If the maximum water content is more than 120%, the membrane will be unsuited for use due to too much swelling of the membrane. In a preferable range, use of the production method of the present invention can afford an electrolyte membrane-electrode assembly particularly superior in performance and durability.

The "maximum water content" referred to herein means the amount of water which an electrolyte membrane can retain during the preparation of an electrolyte membrane-electrode assembly based on the weight of the electrolyte membrane. The maximum water content (Wm) of a membrane can be calculated from formula (6) shown below using the weight (Ww) determined by immersing, in 25°C ultrapure water for 8 hours under intermittent stirring, a sample after measurement of its dry weight (Wd), picking it up, wiping out water droplets attaching on the membrane surface with Kimwipes, and then immediately weighing:

$$Wm = (Ww\text{-}Wd)/Wd \times 100\ (\%)\ (\text{formula}(6))$$

The dry weight (Wd) referred to herein means the weight obtained by vacuum drying an electrolyte membrane with a size 5 cm × 5 cm in a vacuum dryer at 50°C for six hours, cooling it to room temperature in a desiccator, and then immediately weighing it.

When, however, considering the production of the electrolyte membrane-electrode assembly by using such a hydrocarbon-based electrolyte membrane having a glass transition temperature of 160°C or higher, the electrolyte membrane has a high heat resistance, but it may be difficult to form a favorable combined assembly (an electrolyte membrane-electrode assembly) by conventional hot pressing conducted near glass transition temperature. If the combination is formed simply by heat, the resulting device tends to show a low durability when being fabricated into a fuel cell. This tendency becomes remarkable particularly in use of electrolyte membranes with maximum water contents within the ranges of from 10 to 45% and from 70 to 120%. Specifically speaking, an electrolyte membrane with a maximum water content of from 10 to 45% is hard and tends to repel an electrolyte membrane. Even if they are joined locally, the electrode may come off after a lapse of a certain time. When they are forced to attach together at higher temperatures, degradation such as color change of the membrane or embrittlement of the membrane is observed and they tend to result in a less durable electrolyte membrane-electrode assembly. On the other hand, an electrolyte membrane with a maximum water content within the range of from 50 to 65% tends to show a somewhat reduced adhesiveness with an electrode due to the presence of acidic functional groups and, therefore, it is necessary to raise the temperature slightly and the durability may be reduced a little. It, however, is possible to produce a relatively favorable electrolyte membrane-electrode assembly. Furthermore, an electrolyte membrane with a maximum water content within the range of from 70 to 120% deforms due to the presence of more acidic functional groups and much space which retain water therein. The electrolyte membrane, therefore, repels an electrode and it can not be joined with an electrode simply by hot pressing.

Under such circumstances, the present invention provides a suitable method for producing an electrolyte membrane-electrode assembly (i.e., a method for joining an electrolyte membrane and a pair of electrodes). The method for producing an electrolyte membrane-electrode assembly of the present invention is a method for joining a hydrocarbon-based solid polymer electrolyte membrane and a pair of electrodes, which method is characterized in that the hydrocarbon-based solid polymer electrolyte membrane is joined with the electrodes by hot pressing while the content of water contained in the hydrocarbon-based solid polymer electrolyte membrane is within the range of from 10 to 70% of the maximum water content of the hydrocarbon-based solid polymer electrolyte membrane. In the production method of the present invention, it is desirable that the content of water contained in the electrolyte membrane be within the range of from 10 to 50% of the maximum water content. As described previously, because the glass transition temperature of an aromatic hydrocarbon-based solid polymer electrolyte membrane is high, it is difficult for the membrane, when being in dry condition, to be fabricated into an assembly together with electrodes by hot pressing.

In many cases, the electrodes are not joined successfully to the electrolyte membrane even when they are hot pressed. Moreover, a phenomenon of delamination of the electrodes will occur after joining. In order to solve this problem, it is possible to produce an electrolyte membrane-electrode assembly superior in reliability and durability by improving the joinability at the time of hot pressing through activation of the molecular movement of polymers by addition of a slight amount of moisture into the membrane. Although details will be described later, a technique in which a solid polymer electrolyte membrane is made contain a specific amount of moisture, which is the method for preparing an electrolyte membrane-electrode assembly of the present invention, in particular, a technique in which a solid electrolyte membrane is held in an atmosphere where the humidity and the temperature are controlled shows a remarkable join improvement effect when using electrolyte membranes with maximum water contents within the range of from 10 to 45% and the range of from 70 to 120%, where it is particularly difficult to form joined assemblies. Thus, such techniques can afford electrolyte membrane-electrode assemblies superior in reliability and durability.

When the amount of water present in the electrolyte membrane is less than 10% of the maximum water content, the join condition becomes insufficient because the molecular movement of the polymer is not fully activated. In many cases, electrodes are not formed by hot pressing because when the electrolyte membrane shrinks due to vaporization of the moisture added to the electrolyte membrane, strain is generated at the join portions between the electrolyte membrane and the electrodes. Moreover, even if an electrolyte membrane-electrode assembly has seemingly been formed successfully just after hot pressing, there will occur a phenomenon where the electrodes peel off from the electrolyte membrane with time. On the other hand, if hot pressing is carried out when the electrolyte membrane has been made contain moisture not less than 70% of the maximum water content, join will occur while the electrolyte membrane has been considerably swollen and the electrolyte membrane will be joined with electrodes while the electrolyte membrane has been considerably swollen. This will result in occurrence of a large load against the electrolyte membrane and reduction in durability obtained after the electrolyte membrane is fabricated into a fuel cell. Thus, an electrolyte membrane-electrode assembly in which gas leakage easily occurs will be formed. By use of the production method of the present invention, it is possible to produce an electrolyte membrane-electrode assembly with favorable characteristics even in the cases where the amount of water present in the electrolyte membrane is within the range of from 50 to 70% of the maximum water content. However, local deformation occurs in the electrolyte membrane, which may result in an electrolyte membrane-electrode assembly somewhat poor in quality. In comparison to electrolyte membrane-electrode assemblies made by a technique comprising joining by simply increasing the temperature or pressure during hot pressing, electrolyte membrane-electrode assemblies made by the technique of the present invention comprising impregnation with water followed by hot pressing are superior in both performance and durability.

In a fuel cell, thermal transfer is carried out after lamination of an electrolyte membrane with a catalyst layer sheet in which a catalyst layer comprising ion exchange polymer and carbon particles supporting thereon platinum or platinum-ruthenium fine particles has been formed in a uniform thickness on a substrate disposed on a film. It, therefore, is necessary to make the sheet have some adhesion such that the catalyst layer does not peel off through its handling and to allow only the catalyst layer to transfer to the electrolyte membrane. It is difficult to control the balance between the catalyst layer and the substrate on the film. If an electrolyte membrane-electrode assembly is produced by simply increasing the temperature, the adhesion between the catalyst layer and the film in the catalyst layer sheet will be strong, which may result in a problem in that during the peeling of the film, the film is removed with part of the catalyst remaining on the film. Thus, it is impossible to produce a electrolyte membrane-electrode assembly uniform in quality throughout. For this reason, the temperature used during the thermal transfer is preferably not higher than 150°C, more preferably not higher than 140°C.

In the electrolyte membrane-electrode assembly, it is desirable that the periphery of each of the pair of electrodes be formed of a sealing member. By forming the peripheries of the electrodes of a sealing member, it is possible to enhance the durability of a hydrocarbon-based electrolyte membrane, which is inherently less stable. In the peripheries

of the electrodes, the electrolyte membrane is exposed and, therefore, crossover of the fuel due to gas or liquid permeation through the electrolyte membrane easily occurs. For example, in hydrogen/air type fuel cells, when oxygen gas, which is a cathode reaction gas, flows into an anode through the hydrocarbon-based solid polymer electrolyte membrane existing in the peripheries of the electrodes, hydrogen peroxide is generated, which accelerates degradation of the electrolyte membrane. The resistance of an electrolyte membrane using a hydrocarbon-based polymer to side reactions in such fuel cells is less than that of an electrolyte membrane using a fluorine-containing polymer. Thus, in the electrolyte membrane-electrode assembly using the aforementioned electrolyte membrane using a hydrocarbon-based polymer, an electrolyte membrane-electrode assembly which can realize fuel cells with improved reliability and durability can be provided by covering the peripheries of the electrodes with sealing members.

The material of the sealing members, namely sealant, is not particularly restricted. Materials, like adhesive, which exert the effect if it is applied to an electrolyte membrane-electrode assembly and then cured are suitably usable. Another type of material available is a solid sealant which can seal to clog gas channels so as to make it difficult for the reaction gas to reach the periphery of an electrode.

The electrolyte membrane to be used in the electrolyte membrane-electrode assembly, fuel cell and method for producing an electrolyte membrane-electrode assembly of the present invention is preferably one which shows a conductivity (ion conductivity) under atmosphere at 80°C and 95% relative humidity of 0.001 S/cm or more, more preferably 0.01 S/cm, and optimally 0.05 S/cm or more. This is because when the conductivity is 0.001 S/cm or more, a favorable power tends to be obtained in fuel cells using the electrolyte membrane. On the contrary, the power of fuel cells tends to fall when the conductivity is less than 0.001 S/cm. The conductivity is preferably not more than 0.6 S/cm because a too great conductance tends to cause increase in crossover of fuel.

The conductance under atmosphere at 80°C and 95% relative humidity is a value determined by pressing platinum wires (diameter: 0.2 mm) against the surface of a strip-shaped specimen on a self-made probe for measurement (made of polytetrafluoroethylene), holding the specimen in a thermo-hygrostat oven (Nagano Science Co., Ltd., LH-20-01) under conditions at 80°C and 95% RH, measuring an impedance between the platinum wires by 1250 FREQUENCY RESPONSE ANALYSER available from SOLARTRON while varying the distance between the electrodes, and canceling, by use of the following formula (7), a contact resistance between the membrane and the platinum wires from a slope of plotted resistance measurements estimated from the distance between the electrodes and a C-C plot

$$\text{Conductivity [S/cm]} = 1/\text{membrane width [cm]} \times \text{membrane thickness [cm]} \times \text{slope between resistances } [\Omega/\text{cm}] \quad (7)$$

In the electrolyte membrane to be used in the electrolyte membrane-electrode assembly, fuel cell and method for producing an electrolyte membrane-electrode assembly of the present invention, there are no particular limitations as long as an electrolyte membrane which satisfies the provisions outlined in the claims with respect to glass transition temperature and maximum water content. Moreover, it is desirable to use an electrolyte membrane which is a hydrocarbon-based ion exchange membrane having an ion exchange capacity (IEC) within the range of from 1.0 to 3.0 meq /g and exhibits a conductivity, measured under an atmosphere at 80°C and 95% relative humidity, of 0.01 S/cm or more, and in which electrolyte membrane the water absorption at 80°C (W80°C), the water absorption at 25°C (W25°C) and the ion exchange capacity (IEC) satisfy the following formula (1) (hereinafter, an electrolyte membrane of such an embodiment is called an "electrolyte membrane of the first embodiment" in the present invention):

$$(W80°C/W25°C) \leq (ICE) + 0.05 \quad \text{(formula (1))}$$

W80°C: water absorption (% by weight) at 80°C
W25°C: water absorption (% by weight) at 25°C
IEC: ion exchange capacity (meq/g)

The IEC of the electrolyte membrane in the present invention is preferably from 1.0 to 3.0 meq/g, more preferably from 1.5 to 2.8 meq/g, and particularly preferably from 1.8 to 2.7 meq/g. If the IEC is less than 1 meq/g, the membrane resistance becomes large and it tends to be difficult to obtain a sufficient power when being fabricated into a fuel cell. An IEC larger than 3 meq/g is unfavorable because the membrane will be swollen too much. The IEC may be measured, for example, by weighing a sample dried overnight in nitrogen atmosphere, stirring it together with an aqueous sodium hydroxide solution, and back titrating with an aqueous hydrochloric acid solution.

In an electrolyte membrane-electrode assembly using therein an electrolyte membrane which does not satisfy the above formula (1), in other words, has a (W80°C/W25°C) value larger than the value of (IEC) + 0.05, the swelling property of the membrane tends to become great and crossover of fuel also tends to be large.

The W80°C is a value measured in a way described below. First, a sample cut into a size 3 cm × 3 cm is immersed in 200 ml pure water at 80°C for 4 hours. Then, the sample is removed and immediately sandwiched between filter papers to remove the excess water remaining on the surface. The sample is hermetically sealed in a weighing bottle and weighed, thereby determining the weight W1 of the sample which has absorbed water. Subsequently, the sample is dried under reduced pressure at 120°C for 2 hours and then hermetically sealed in a weighing bottle. Thus, the weight W2 of the dried sample is determined. From these values, the W80°C is calculated by the following formula (8):

$$W80°C\ [wt\%] = (W1\ [g] - W2\ [g])/W2\ [g] \times 100\ (8)$$

The W80°C/W25°C indicates a value determined in a way described below. First, a sample cut into a size 3 cm × 3 cm is immersed in 200 ml pure water at 25°C for 24 hours. Then, the sample is removed and immediately sandwiched between filter papers to remove the excess water remaining on the surface. The sample is hermetically sealed in a weighing bottle and weighed, thereby determining the weight W3 of the sample which has absorbed water. Subsequently, the sample is dried under reduced pressure at 120°C for 2 hours and then hermetically sealed in a weighing bottle. Thus, the weight W4 of the dried sample is determined. From these values, the W25°C is calculated by the following formula. From the value of W25°C determined in this manner and the value of W80°C determined in the manner mentioned previously, the W80°C/W25°C is calculated by the following formula (9):

$$W25°C\ [wt\%] = (W3\ [g] - W4\ [g])/W4\ [g] \times 100\ (8)$$

In the electrolyte membrane-electrode assembly, fuel cell and method for producing an electrolyte membrane-electrode assembly of the present invention, it is desirable to use an electrolyte membrane that comprises a sulfonic acid group-containing hydrocarbon-based solid polymer compound as outlined in the claims which is a hydrocarbon-based solid polymer having a sulfonic acid group content (an ion exchange capacity based on the polymer structure) of 2.0 meq/g or more and which exhibits a moisture absorption (λ) defined as the number of water molecules per sulfonic acid group under an atmosphere at 80°C and 95% relative humidity of a value less than a relation (sulfonic acid group content)×6 - 2, among the electrolyte membranes of the first embodiment described above. The ion exchange capacity based on the polymer structure referred to herein can be determined by chemical structure analysis using NMR or the like. When such methods can not be used, an ion exchange capacity determined by titration may be used instead. (Hereinafter, electrolyte membranes of such an embodiment are called "electrolyte membranes of the second embodiment" in the present invention.) Such a sulfonic acid group-containing hydrocarbon-based solid polymer compound shows a proton conductivity in a level the same as that of fluorine-containing polymers and has good workability and moisture resistance though it is a non-fluorine-containing polymer. Electrolyte membranes using such sulfonic acid group-containing hydrocarbon-based polymer compounds are superior in ion conductivity and, particularly, in dimension stability when being wetted.

An electrolyte membrane including sulfonic acid groups has a highly hydrophilic structure due to the sulfonic acid groups. When the amount of sulfonic acid groups introduced is increased in order to increase the ion conductivity, the hygroscopicity also increases and, therefore, the durability of the electrolyte membrane in its swelling and shrinking occurring when it absorbs and releases moisture tends to decrease. Generally, if the sulfonic acid group content of an electrolyte membrane is set to be 2.0 meq/g or more for enhancement of the ion conductivity, λ will become a value larger than (sulfonic acid group content)×6-2 and the membrane will be much swollen when absorbing moisture. Setting λ to be a value smaller than the relation (sulfonic acid group content)×6-2 makes it possible to realize an electrolyte membrane which exerts good membrane dimension stability in wetting. It is particularly desirable that λ be a value smaller than a relation (sulfonic acid group content)×6-2.

The moisture absorption (λ) referred to herein indicates a value determined by putting a film sample whose dry weight has already been taken into a stopperable glass sample tube, placing the tube for one hour in a thermo-hygrostat oven (Nagano Science Co., Ltd., LH-20-01) which has been set at 80°C and 95% relative humidity, stoppering the sample tube simultaneously with its removal and allowing it cool to room temperature, then taking the weight including the sample tube, determining the moisture absorption amount from the weight increase based on the dry weight, and calculating the amount of water molecules to the amount of sulfonic acid groups which was set at the time of polymer preparation. (In the case of a polymer resulting from introduction of sulfonic acid groups into a polymer by sulfonation

reaction or the like, it may be calculated using the amount of sulfonic acid groups determined by titration.)

In electrolyte membranes of the second embodiment in the present invention, the methods for determining IEC and conductivity are like those already described for electrolyte membrane of the first embodiment in the present invention.

In a fuel cell, an electrolyte membrane, which is an ion exchange membrane, is exposed to high-temperature high-humidity atmosphere and, therefore, swelling of the membrane tends to occur. In order to control the swelling, it is necessary to minimize the IEC. If do so, the proton conductivity will decrease and, therefore, the power as a fuel cell tends to decline. Thus, from the viewpoint of obtaining a fuel cell having excellent power characteristics while having durability, the electrolyte membrane in the electrolyte membrane-electrode assembly, fuel cell and method for producing an electrolyte membrane-electrode assembly of the present invention is more preferably one which is a hydrocarbon-based ion exchange membrane having an ion exchange capacity within the range of from 1.0 to 3.0 meq/g and exhibits a conductivity, measured under an atmosphere at 80°C and 95% relative humidity, of 0.01 S/cm or more and also satisfies at least any one of the specific relations [1]-[3] listed below among the aforementioned electrolyte membranes of the first embodiment in the present invention.

[1] The water absorption at 80°C (W80°C) and the ion exchange capacity satisfy the following formula (2) (hereinafter, an electrolyte membrane of this embodiment is called "electrolyte membrane of the third embodiment" in the present invention):

$$W80°C < 4.0\times(IEC)^{5.1} \text{ (formula (2))}$$

W80°C: water absorption (% by weight) at 80°C
IEC: ion exchange capacity (meq/g)

A smaller W80°C is preferred because the durability is improved. If, however, at least formula (2) is satisfied, it becomes possible to render the power and the durability mutually compatible. The W80°C and the IEC indicate the values determined in manners like those described previously.

[2] The water absorption at 80°C (W80°C), the water absorption at 25°C (W25°C) and the ion exchange capacity satisfy the following formula (3) (hereinafter, an electrolyte membrane of this embodiment is called "electrolyte membrane of the fourth embodiment" in the present invention):

$$(W80°C/W25°C) \leq 1.27\times(ICE) - 0.78 \text{ (formula (3))}$$

W80°C: water absorption (% by weight) at 80°C
W25°C: water absorption (% by weight) at 25°C
IEC: ion exchange capacity (meq/g)

A smaller W80°C/W25°C is preferred because the durability is improved. If, however, at least formula (3) is satisfied, it becomes possible to render the power and the durability mutually compatible. The W80°C/W25°C and the IEC indicate the values determined in manners like those described previously.

[3] The volume at 25°C and 65% relative humidity (V1), the volume after immersion in water at 25°C (V2) and the ion exchange capacity satisfy the following formula (4) (hereinafter, an electrolyte membrane of this embodiment is called "electrolyte membrane of the fifth embodiment" in the present invention):

$$(V2/V1) \leq 1.05\times(IEC) - 0.38 \text{ formula (4)}$$

V1: volume ($cm^3$) at 25°C and 65% relative humidity
V2: volume ($cm^3$) in 25°C water
IEC: ion exchange capacity (meq/g)

A smaller V2/V1 is preferred because the durability is improved. If, however, at least formula (4) is satisfied, it

is possible to render the power and the durability mutually compatible.

The V2/V1 may be calculated in a manner mentioned below. First, a sample is cut into a size 3 cmx3 cm in a room at 25°C and 65% relative humidity and the thickness thereof is measured. Thus, the volume V1 is calculated. Subsequently, the sample is immersed in 200 ml of pure water at 25°C for four hours. Then, the sample is picked up and its thickness, width and length are immediately measured. Thus, the volume V2 is calculated. Based on the thus-obtained values, the V2/V1 is calculated.

Among the aforementioned electrolyte membranes of the first embodiment in the present invention, electrolyte membranes of the third to fifth embodiments in the present invention, which are hydrocarbon-based ion exchange membranes having an ion exchange capacity within the range of from 1.0 to 3.0 meq/g and exhibit a conductivity, measured under an atmosphere at 80°C and 95% relative humidity, of 0.01.S/cm or more and have at least any one specific relation of the above-mentioned [1] - [3] show higher durability in comparison to hydrocarbon-based ion exchange membranes with conventional structures and possessing characteristics outside the aforementioned ranges. Moreover, fuel cells produced using electrolyte membranes of the third to fifth embodiments in the present invention show initial characteristics at least comparable to those of cells using perfluorosulfonic acid-based ion exchange membranes. Use of electrolyte membranes of the third to fifth embodiments in the present invention makes it possible to realize fuel cells excellent in power generation characteristics and durability while they are hydrocarbon-based ion exchange membranes, which can be produced inexpensively and simply.

The electrolyte membrane used in the electrolyte membrane-electrode assembly, fuel cell and method for producing an electrolyte membrane-electrode assembly of the present invention preferably is one which is a hydrocarbon-based ion exchange membrane having an ion exchange capacity within the range of from 1.0 to 3.0 meq/g and exhibits a conductivity, measured under an atmosphere at 80°C and 95% relative humidity, of 0.01 S/cm or more and in which the tensile breaking strength (DT) measured in 25°C water and the ion exchange capacity satisfy the following formula (5):

$$DT \geq 135 - 55\times(IEC) \text{ (formula (5))}$$

DT: tensile breaking strength (MPa)
IEC: ion exchange capacity (meq/g)

A larger DT is preferred because the durability is improved. If, however, at least formula (5) is satisfied, it is possible to render the power and the durability mutually compatible.

The DT can be determined by subjecting a sample cut in a strip shape to a tensile test in water with a speed of 20 mm/min at 25°C by use of a Tensilon TM3 as a measuring device, and calculating the DT from the stress at the time of breaking and the thickness of the sample. As the thickness of the sample, a value is used which has been determined by measuring the thickness of the sample in 25°C water while varying the load and extrapolatingly determining the thickness when the load is zero.

The above-mentioned electrolyte membrane of the sixth embodiment also exerts a higher durability in comparison to hydrocarbon-based ion exchange membranes having conventional structures and possessing characteristics outside the aforementioned ranges. Fuel cells produced using this show initial characteristics at least comparable to those of cells using perfluorosulfonic acid-based ion exchange membranes. As mentioned above, use of the above-mentioned electrolyte membrane of the sixth embodiment in the present invention also makes it possible to realize fuel cells excellent in power generation characteristics and durability while they are hydrocarbon-based ion exchange membranes, which can be produced inexpensively and simply.

The electrolyte membrane including sulfonic acid groups has a highly hydrophilic structure due to the sulfonic acid groups included therein. It, therefore, shows a tendency that the mechanical characteristics such as elastic modulus and strength decrease and the tensile elongation increases when it absorbs moisture. The present inventors came to have the conclusion that if a membrane has a low tensile strength when having absorbed moisture, the membrane shows a reduced durability in its swelling and shrinking occurring when it absorbs and releases moisture and that membranes having greater tensile strengths when having absorbed moisture have improved durabilities under wet conditions particularly, e.g., in use in fuel cells. Moreover, the present inventors noted that a great tensile elongation is related to the swelling and shrinking behaviors of a membrane shown when the membrane absorbs and releases moisture and they came to have the conclusion that membranes which show smaller tensile elongations when having absorbed moisture have improved durabilities under wet conditions particularly, e.g., in use in fuel cells.

Specifically speaking, in the electrolyte membrane-electrode assembly, fuel cell and method for producing an electrolyte membrane-electrode assembly of the present invention, an electrolyte membrane can be preferably used which is a hydrocarbon-based ion exchange membrane composed of a substantially single compound and exhibits a tensile strength of 40 MPa or more under an atmosphere at 20°C and 65% relative humidity and also has characteristics

[A] to [C] provided below.

[A] The tensile strength measured in 25°C water is 30 MPa or more (hereinafter, an electrolyte membrane of this embodiment is called "electrolyte membrane of the seventh embodiment" in the present invention).
[B] The tensile elongation measured in 25°C water is 250% or less (hereinafter, an electrolyte membrane of this embodiment is called "electrolyte membrane of the eighth embodiment" in the present invention).
[C] The difference between the tensile elongation measured in 25°C water and the tensile elongation measured in an atmosphere at 20°C and 65% relative humidity is a value of 150% or less (hereinafter, an electrolyte membrane of this embodiment is called "electrolyte membrane of the ninth embodiment" in the present invention).

For the purpose of improving the mechanical characteristics of a membrane when having been wetted, use of some reinforcing components with an electrolyte has been attempted. The electrolyte membranes of the seventh to ninth embodiments of the present invention are characterized in that they need no reinforcing components. The term "composed of a substantially single compound" referred to herein means including no reinforcing components for such a purpose. Moreover, the electrolyte membranes of the seventh to ninth embodiments in the present invention require no complicated forming processes because the electrolyte membranes can exert dimension stability due to their own characteristics.

The electrolyte membranes of the seventh to ninth embodiments in the present invention have a tensile strength of 40 MPa or more (preferably 45 MPa or more) in an atmosphere at 20°C and 65% relative humidity. This is because a tensile strength of less than 40 MPa tends to cause difficulty in handling. The tensile strength in an atmosphere at 20°C and 65% relative humidity indicates a value measured by means of a Tensilon UTMII manufactured by Toyo Baldwin Co. using films which have been cut in a regulated size.

The electrolyte membrane of the seventh embodiment in the present invention is characterized by being a hydrocarbon-based ion exchange membrane composed of a substantially single compound, exhibiting a tensile strength of 40 MPa or more under an atmosphere at 20°C and 65% relative humidity, and also exhibiting a tensile strength measured in 25°C water of 30 MPa or more. Even though a membrane is one which has a tensile strength in an atmosphere at 20°C and 65% relative humidity of 40 MPa or more and which can be used favorably in ordinary handling, if the tensile strength in water is less than 30 MPa, when it is fabricated into a fuel cell and power generation is carried out, problems resulting from the creep of the membrane may arise or the membrane may tend to be damaged in a swelling/shrinking cycle with start and stop. The tensile strength in water is more preferably 35 MPa or more, and even more preferably 40 MPa or more. The tensile strength in 25°C water indicates a value measured by means of a Tensilon UTMIII manufactured by Toyo Baldwin Co. using films which have been cut in a regulated size.

The electrolyte membrane of the eighth embodiment in the present invention is characterized by being a hydrocarbon-based ion exchange membrane composed of a substantially single compound, exhibiting a tensile strength of 40 MPa or more under an atmosphere at 20°C and 65% relative humidity, and also exhibiting a tensile elongation measured in 25°C water of 250% or more. Even though a membrane is one which has a tensile strength in an atmosphere at 20°C and 65% relative humidity of 40 MPa or more and which can be used favorably in ordinary handling, if the tensile elongation in water is more than 250%, when it is fabricated into a fuel cell and power generation is carried out, problems resulting from the creep of the membrane will arise or the membrane will tend to be damaged in a swelling/shrinking cycle with start and stop. The tensile elongation in water is more preferably 200% or less. Even if a membrane has a tensile elongation up to 250%, the ease of its handling as an electrolyte membrane tends to decline if the membrane does not have the strength characteristic under the above-mentioned relative humidity. Thus, the electrolyte membrane of the eighth embodiment in the present invention is required to have both the characteristics. The tensile elongation in 25°C water indicates a value measured by means of a Tensilon UTMIII manufactured by Toyo Baldwin Co. using films which have been cut in a regulated size.

The electrolyte membrane of the ninth embodiment in the present invention is characterized by being a hydrocarbon-based ion exchange membrane composed of a substantially single compound, exhibiting a tensile strength of 40 MPa or more under an atmosphere at 20°C and 65% relative humidity, and exhibiting a difference between the tensile elongation measured in 25°C water and the tensile elongation measured in an atmosphere at 20°C and 65% relative humidity of 150% or less. This is because even though a membrane is one which has a tensile strength in an atmosphere at 20°C and 65% relative humidity of 40 MPa or more and which can be used favorably in ordinary handling, if the difference between the tensile elongation measured in 25°C water and the tensile elongation measured in an atmosphere at 20°C and 65% relative humidity (i.e., the difference in tensile elongation between a time when having absorbed moisture and a time when being dried) is over 150%, the electrolyte membrane tends to be damaged in a swelling/shrinking cycle. The difference between the tensile elongation measured in 25°C water and the tensile elongation measured in an atmosphere at 20°C and 65% relative humidity is a value (in %) obtained by subtracting the tensile elongation value (in %) measured in an atmosphere at 65% relative humidity from the tensile elongation value (in %) in 25°C water. The difference in tensile elongation between a time when having absorbed moisture and a time when being

dried is desirably not more than 100%. That the tensile elongation measured in 25°C water is 250% or less and the above-mentioned difference is up to 150% is more preferable because the stability in a start/stop cycle in fuel cells tends to be improved.

The electrolyte membranes of the seventh to ninth embodiments in the present invention are characterized by being useful also for use in direct methanol fuel cells which use methanol as fuel. It, therefore, is desirable that the electrolyte membranes of the seventh to ninth embodiments in the present invention exhibit a methanol permeation rate of 7 $mmol/m^2 \cdot sec$ The methanol permeation rate is more preferably 4 $mmol/m^2 \cdot sec$ and particularly preferably 1 $mmol/m^2 \cdot sec$. The reason is that when such methanol permeabilities are shown, a particularly desirable power generation characteristic is shown. The methanol permeation rate is preferably not less than 0.1 $mmol/m^2 \cdot sec$ because if the rate is too low, the conductivity itself will tend to be too low.

The methanol permeation rate, which indicates the liquid fuel permeation rate of the electrolyte membrane, may be determined in the following manner. First, an electrolyte membrane with an average thickness of 50 μm which has been immersed for 24 hours in 5 mol/l aqueous methanol solution controlled to 25°C is inserted between H-shaped cells. A 100-ml portion of 5 mol/l aqueous methanol solution is poured into one of the cells and 100 ml of ultrapure water (18 MΩ·cm) is poured into the other cell. The rate can be calculated through chromatography measurement of the amount of methanol which diffuses into the ultrapure water through the electrolyte membrane while stirring both the cells at 25°C. Specifically, it can be calculated on the basis of the methanol concentration change rate [Ct] (mmol/L/s) in the cell containing ultrapure water using the formula (10) below:

$$\text{Methanol permeation rate } [mmol/m^2/s] = [Ct\ [mmol/L/s] \times 0.1 [L])/2 \times 10\text{-}4\ [m^2]$$

(formula 10)

The methanol permeability is evaluated by preparing a specimen with an average thickness of 50 μm. In, however, a practical case of using as an ion exchange membrane for fuel cells, the thickness of the membrane is not particularly restricted. The membrane with an average thickness of 50 μm practically indicates one having an average thickness within the range of from 48 μm to 52 μm.

As the electrolyte membrane to be used in the electrolyte membrane-electrode assembly, fuel cell and method for producing the electrolyte membrane-electrode assembly, an electrolyte membrane which is a non-perfluorocarbon sulfonic acid-based hydrocarbon-based ion exchange membrane for fuel cells using liquid fuel and which electrolyte membrane exhibits a difference of 20% or less between the methanol permeation coefficients measured before and after the immersion of the ion exchange membrane in a 5 mol/l aqueous solution of methanol for 20 hours is also mentioned as one of the preferred embodiments (hereinafter, an electrolyte membrane of this embodiment is called "electrolyte membrane of the tenth embodiment" in the present invention). The non-perfluorocarbon sulfonic acid-based material in the electrolyte membrane of the tenth embodiment refers to aromatic materials other than the materials in which all hydrogens in their main chains have been replaced by fluorines, such as "Nafion" (registered trademark) and may be a partially fluorinated compound.

When a conventional Nafion (registered trademark) film is used in fuel cells which use liquid organic fuel such as methanol, a problem called crossover in which methanol flows into the air electrode side through an ion exchange membrane is remarkable, for example. The occurrence of the crossover causes a problem that the liquid fuel and an oxidizer react together directly, resulting in reduction in power or a problem that the fuel leaks out from the cathode side. Thus, there is a demand for development of ion exchange membranes with less crossover. High cost has been pointed out as another problem with perfluorocarbon sulfonic acid membranes. For practical use of fuel cells, an ion exchange membrane which can solve these problems is necessary.

As one example of application of an ion exchange membrane in a direct methanol fuel cell, which is a type of fuel cell which uses liquid fuel, there is a report that a fuel cell which has a relatively good ion conductivity and a relatively good initial power generation characteristic has been developed (see, for example, non-patent document 7). However, when the fuel cell disclosed in non-patent document 7 is operated repeatedly, the morphology of the ion exchange membrane changes so that the methanol permeability increases, resulting in voltage change due to crossleak of methanol. Thus, the fuel cell has a problem of deterioration of cell performance. The deterioration of cell performance must be avoided because it will directly lower the performance of a device which is equipped with the fuel cell or will unstabilize the device. Moreover, there is another report that the morphology of an ion exchange membrane have effects on direct methanol fuel cells (see, for example, non-patent document 8).

The present inventors observed a phenomenon wherein when a direct methanol fuel cell, which is a type of fuel cell using liquid fuel, is operated continuously, the performance changes with time even if the initial performance is good and the cell performance tends to change particularly within a time range until several tens of hours from the start of power generation. The occurrence of such change in performance is unfavorable and is required to be improved

because it will complicate the control in a device equipped with the fuel cell. One of the causes of the change in performance may be an influence of change in physical properties of materials present in electrodes, like catalyst poisoning The present inventors conducted the study mainly dealing with ion exchange membranes and, as a result, they found that one cause is that an ion exchange membrane which has been exposed to a power generation environment changes so that the morphology of the membrane reaches equilibrium under the power generation environment.

The above-mentioned electrolyte membrane of the tenth embodiment in the present invention solves the aforementioned problem and is characterized by using an ion exchange membrane which shows particularly little change in physical properties. Regarding the electrolyte membrane of the tenth embodiment, a fuel cell using an ion exchange membrane which shows a smaller change in methanol permeation coefficient exhibits a smaller change in cell performance during continuous power generation. That electrolyte membrane is also characterized by showing less change in morphology of the membrane. By use of the electrolyte membrane of the tenth embodiment in the present invention, it is possible to realize ion exchange membranes that show less change in liquid fuel permeability, which membranes are suited for use in a type of fuel cells which use liquid fuel, such as direct methanol fuel cells. Application of such an electrolyte membrane to fuel cells makes it possible to operate fuel cells in a stable condition for a long period.

The electrolyte membrane of the tenth embodiment in the present invention is a non-perfluorocarbon sulfonic acid-based hydrocarbon-based ion exchange membrane for fuel cells using liquid fuel and exhibits a difference of 20% or less between the methanol permeation coefficients measured before and after the immersion of the ion exchange membrane in a 5 mol/l aqueous solution of methanol for 20 hours. Use of an electrolyte membrane which exhibits a difference in the aforementioned methanol permeation coefficient of more than 20% will lead to a large change in cell performance and may result in fuel cells which are difficult to control. The difference in the methanol permeation coefficient is preferably not more than 10%.

The methanol permeation coefficient is calculated on the basis of the methanol permeation rate calculated in the manner described previously using the following formula (11).

$$\text{Methanol permeation coefficient [mmol/m/s]} = \text{methanol permeation rate [mmol/m}^2\text{/s]} \times \text{film thickness [m]} \quad \text{formula (11)}$$

The electrolyte membrane of the tenth embodiment in the present invention is preferably subjected to a treatment of immersing in a solvent at a temperature of 80°C or higher (hereinafter, an electrolyte membrane of this embodiment is called "electrolyte membrane of the eleventh embodiment" in the present invention). By the electrolyte membrane of the eleventh embodiment in the present invention, it is possible to stabilize only drawbacks of a membrane and to obtain an electrolyte membrane with improved stability. In particular, it is also possible to eliminate the problems caused by the presence of parts whose morphology easily changes. Specifically speaking, when parts in an electrolyte membrane where morphology change will occur are removed before the mounting of the electrolyte membrane in a fuel cell, morphology change of the electrolyte membrane hardly occurs inside the fuel cell. Thus, the cell performance is stabilized even in the initial condition and a fuel cell which can be controlled very easily is afforded.

The electrolyte membrane of the eleventh embodiment in the present invention is preferably one which has been treated in a solvent at a temperature of 90°C or higher. This can shorten the treatment time. Although the solvent is not particularly restricted, it is desirable to carry out the treatment in a polar solvent. Solvents including water, alcohol, ethylene glycol, glycerol, N-methyl-2-pyrrolidone, N,N-dimethylformamide, N,N-dimethylacetamide are provided as preferable examples. After the treatment is carried out in a solvent, the solvent must be removed. Therefore, treatment carried out in a solvent including a component having a boiling point of 200°C or higher as a main component is not very favorable because it renders the following steps complicated. Because a liquid including water or alcohol is a major liquid fuel (or such a liquid is formed during the chemical reaction occurring during power generation), it is particularly desirable to use a solvent including water and/or alcohol as a solvent to be used.

The electrolyte membrane of the eleventh embodiment in the present invention to which such treatment is applied may be either in a salt form or in an acid form and is not particularly restricted. When an electrolyte membrane in an acid form is used, a special attention is needed because there is a possibility of hydrolyzing some solvents.

When an electrolyte membrane is finally finished for use in fuel cells, one in an acid form is preferred. Therefore, when an electrolyte membrane is treated in a salt form, it is desirable to convert the electrolyte membrane to one in an acid form by immersing it in an acidic solution such as aqueous sulfuric acid solution, aqueous hydrochloric acid solution and aqueous phosphoric acid solution, followed by water rinsing to remove excess acid component. The concentration and temperature of the acidic solution to be used for the conversion to an acid form may be determined depending on the purpose. There is a tendency that use of an acid with a higher concentration or a solution at a higher temperature results in a higher conversion speed or a higher conversion efficiency. As water to be used for water rinsing, water containing cation other than proton may return the electrolyte membrane having been converted to the acid form back

to the salt form. Therefore, it must be controlled and may be determined depending on the purpose. Regarding the storage form, although storage in the form containing a solvent will cause no problems, storage in a dry state is also available.

An electrolyte membrane in the present invention, which is of any of the first to eleventh embodiments, is preferably one having been heat treated at a temperature of 150°C or higher while being in the acid form. Although, as previously mentioned, the electrolyte membrane in the present invention has acidic functional groups (preferably, sulfonic acid groups), it is possible to improve the stability of the form of the electrolyte membrane by activating the acidic functional groups present in the electrolyte membrane and crosslinking them with molecules adjacent thereto through application of heat treatment at a temperature of 150°C or higher. Therefore, in fuel cells of the type of using liquid fuel, it is possible, for example, to reduce the crossleak of methanol, which is a primary problem with direct methanol fuel cells, by a simple treatment. In fuel cells of the type of using hydrogen gas and oxidation gas such as oxygen as fuel, enhancement of the form stability of a membrane makes it possible to reduce the degradation of the electrolyte membrane which is caused by swelling and shrinking of the membrane.

An electrolyte membrane as an ion exchange membrane, particularly, an electrolyte membrane which can exert good performance as an ion exchange membrane for fuel cell applications must have a high ion conductivity, particularly a high proton conductivity. As a measure for this, to increase the amount of ion-exchangeable functional groups in a polymer is preferred. This is an idea that the concentration of the medium for ion conduction or proton conduction is increased through increase in the amount of acidic functional groups present in the electrolyte membrane. However, as previously described, as the amount of acidic functional groups is increased, the easiness of the electrolyte membrane to swell in water increases correspondingly and there is a problem that when operation and shutdown of a fuel cell are repeated, the membrane repeats swelling and shrinking, which will result in degradation of the membrane. In addition, if the operation temperature of the fuel cell is increased, the electrolyte membrane may dissolve.

As described previously, by heat treating an electrolyte membrane having acidic functional groups at a temperature of 150°C or higher to crosslink some acidic functional groups with molecules adjacent thereto, it is possible to improve the form stability of the membrane. Moreover, by application of the heat treatment, the form stability of an electrolyte membrane is improved even if the membrane has greatly increased acidic functional groups in the membrane. This also results in effects such as reduction in swelling and shrinkage which may occur when the membrane is wetted with a solvent such as water, and suppression of membrane degradation due to swelling and shrinkage caused by start and stop of the operation of a fuel cell. When a heat treatment is conducted at a temperature lower than 150°C, the form stability is influenced only slightly because a crosslinking reaction is less liable to proceed. In order to avoid the thermal degradation of acidic groups, the temperature of the heat treatment is preferably not higher than 250°C.

In order to carry out the crosslinking treatment through acidic functional groups, it is desirable that the ion exchangeable functional groups present in the electrolyte membrane be in the acid form and the treatment be carried out under an inert gas atmosphere such as nitrogen, helium and argon. In the case where an electrolyte membrane with functional groups in the salt form is treated, an investigation conducted at around 150°C revealed that reactions hardly proceed. It, however, is possible to allow acid form functional groups and salt form functional groups to exist together. In this case, it is preferable that the acid form functional groups be contained in a proportion of 20% or more, more preferably not less than 40% and not more than 95%. If the proportion of acidic functional groups is lower than 20%, the effect of crosslinking is small. Treatment carried out in an atmosphere including a large amount of oxygen is undesirable because it will result in degradation of the membrane due to an undesirable side reaction, namely oxidation of the electrolyte membrane caused by oxygen. The treatment is desirably carried out at an oxygen concentration of 10% at most, more desirably 5% or less. If higher than 10%, electrolyte membranes tend to be oxidized.

The electrolyte membrane in the present invention is preferably one which has ion exchangeable functional groups in the molecule and which has been heat treated at a temperature of 200°C or higher (more preferably, 350°C or higher) while being in the salt form. In an electrolyte membrane inside which molecular chains are fixed softly, there seems to be defects of a minute scale inside the electrolyte membrane. In such an electrolyte membrane, liquid fuel, moisture or a gas component enters the defects or is allowed to move therethrough. As a result, the membrane may be swollen greatly or it becomes easy for fuel or moisture to pass through the membrane and the degradation of the membrane tends to proceed easily from such defects. As causes of reduction in durability of fuel cells, physical degradation caused by repetition of swelling and shrinking of membranes and chemical adverse effects caused by active species resulting from crossleak of fuel have been pointed out strongly.

Regarding techniques for improving the stability of electrolyte membranes, as further improvement in membrane stability over the techniques disclosed in Patent Documents 1, 2 and Non-Patent Document 1, a technique for improving the stability through thermal crosslinking and a technique for improving the stability through photocrosslinking are disclosed, for example, in Patent Document 4 and Patent Document 5. In Patent Document 4, thermal crosslinking is made to proceed by using, as a starting material, a polymer in which multiple bonds such as ethylene groups and ethynyl groups, benzoxazine groups, oxazole groups have been introduced. On the other hand, Patent Document 5 introduces a polymer which has been subjected to thermal crosslinking or photocrosslinking starting from carbonyl groups. In these

polymers, the form stability is improved by the effect of crosslinking. It, however, is difficult to control the crosslinking reactions and cleavage reactions of molecules also proceed along with the crosslinking reactions because the crosslinking reactions are derived from radical reactions. Those polymers, therefore, have a drawback in that the polymers themselves become weak though they are superior in form stability. Recently, many reports that radical species is involved in degradation of electrolyte membranes have been provided in academic societies.

The aforementioned electrolyte membrane which has been subjected to heat treatment at a temperature of 200°C or higher while having ion exchangeable functional groups in the molecule and being in the salt form is provided as a suitable electrolyte membrane capable of solving the above-mentioned problems as well. Application of such heat treatment of an electrolyte membrane having ion exchangeable functional groups has an effect to remove impurities, such as solvent, present in the electrolyte membrane, thereby changing the electrolyte membrane to denser one. In addition, the stability of an electrolyte membrane can be improved by making annealing for fixing molecular chains at high temperatures and stabilization of a specific molecular structure proceed. Thus, in fuel cells of the type of using liquid fuel, it is possible, for example, to reduce the crossleak of methanol, which is a primary problem with direct methanol fuel cells, without losing the proton conductivity of an electrolyte membrane. In fuel cells about to be widely used such as those using hydrogen gas and oxidation gas as fuel, the increase in membrane stability makes it possible to suppress the crossleak of fuel gas in low level and, therefore, it becomes possible to reduce the degradation of the electrolyte membrane.

From the viewpoint of successfully carrying out the heat treatment at a temperature of 200°C or higher, the electrolyte membrane in the present invention is preferably one made of a material with thermal stability at temperatures higher than 200°C. This is because when the basic thermal stability as an electrolyte membrane is lower than 200°C, it may be difficult to obtain an electrolyte membrane with improved characteristics by the above-mentioned post processing. Treatment carried out at temperatures of lower than 200°C can not anticipate so much of effects on improvement in the stability. For suppressing the thermal degradation of polymer chains, it is desirable to carry out the treatment at temperatures not higher than 500°C.

That the technique comprising incorporation of radical reactants in a molecule is known as conventional art of processing methods aiming at improvement in stability of electrolyte membranes is described previously. However, the crosslinking using radical reactions will result also in embrittlement of electrolyte membranes, though it has an effect on improvement in stability. From such a viewpoint, the heat treatment carried out at temperatures of 200°C or higher is not suitable for systems where radical reactions are caused by the heat treatment. On the other hand, what are suited to be subjected to heat treatment at temperatures of 200°C or higher include those having cyano groups in the molecule. In those having cyano groups, triazine rings are formed through a reaction in which three cyano groups are cyclized by the heat treatment at temperatures of 200°C or higher. The stability is further improved because the formation of triazine rings is not an intermolecular crosslinking reaction. Because this reaction is not a crosslinking reaction which proceeds through radical reactions, it can be easily controlled even though it is a crosslinking reaction and almost no embrittlement of electrolyte membranes is observed.

Because such a treatment for improving stability is a treatment carried out at relatively high temperatures, the electrolyte membrane is preferably an ion exchange membrane whose ion exchangeable functional groups are in the salt form and it is preferably treated under an inert gas atmosphere such as nitrogen, helium and argon. Treatment of an electrolyte membrane whose ion exchangeable functional groups are in the acid form and treatment carried out in an atmosphere including a large amount of oxygen are undesirable because they will result in degradation of the membrane due to undesirable side reactions, namely elimination of ion exchangeable functional groups caused by acid or oxidation of the electrolyte membrane caused by oxygen. It is desirable that the ion exchangeable functional groups be of salt-form in a proportion of at least 80%, more desirably at least 90%. If the amount of salt-form ion exchangeable functional group is small, it tends to result in degradation of the electrolyte membrane for the reason described previously. Further, the oxygen concentration is desirably 10% or lower, and more desirably 5% or lower. This is because if the oxygen concentration is over 10%, the electrolyte membrane tends to be degraded easily through oxidization.

The electrolyte membrane which has been treated in such methods can be used as a salt-form electrolyte membrane. However, when its use as an electrolyte membrane for fuel cells is intended, it is desirable to convert it into an acid-form electrolyte membrane like those described previously. The method of this is just like that described previously.

The electrolyte membranes having been subjected to the heat treatment at temperatures of 200°C or higher exhibit suppressed permeabilies of liquid fuel and gas as an effect of improvement in their stability. In comparison using samples with the same thickness with respect to the methanol permeation rate, which is the rate with which a representative liquid fuel methanol permeates, the electrolyte membrane having been subjected to the heat treatment at temperatures of 200°C or higher can reduce the permeation coefficient by 20% or more in comparison to the case of applying no heat treatment. In some cases, it is also possible to reduce by 40% or more. In the electrolyte membrane having been subjected to the aforementioned heat treatment, it is possible to suppress the swelling of the membrane in a better form. It, therefore, can exert both a high ion conductivity and high performance of preventing or suppressing

liquid fuel permeation.

Examples of polymers for forming the electrolyte membrane in the present invention include ionomers including at least one component of polystyrene sulfonic acid, poly(trifluorostyrene) sulfonic acid, polyvinyl phosphonic acid, polyvinyl carboxylic acid and polyvinyl sulfonic acid. Moreover, examples of aromatic polymers include polymers comprising polymers including at least one of constitutional components such as polysulfone, polyether sulfone, polyphenylene oxide, polyphenylene sulfide, polyphenylene sulfide sufone, polyparaphenylene, polyarylene polymers, polyphenyl quinoxaline, polyarylketone, polyether ketone, polybenzoxazole, polybenzothiazole and polyimide in which at least one of sulfonic acid group, phosphonic acid group, carboxyl group and their derivatives has been introduced (preferably, ones satisfying the characteristics of any electrolyte membrane of the first to eleventh embodiments). The polysulfone, polyether sulfone, and polyether ketone referred to herein are generic names of polymers having a sulfone bond, ether bond and ketone bond in the molecular chain and include polymer framework structures called polyether ketone ketone, polyether ether ketone, polyether ether ketone ketone, polyether ketone ether ketone ketone and polyether ketone sulfone. They do not restrict specific polymer structures. It should be noted that when heat treatment at temperatures of 1502°C or higher or 200°C or higher are carried out, it is necessary to use a polymer having thermal stability of 150°C or higher or 200°C or higher.

Among the above-mentioned polymers, polymers having sulfonic acid groups on aromatic rings can be produced by allowing an appropriate sulfonating agent to react with a polymer having a framework such as those provided above as examples. As such a sulfonating agent, those reported as examples for introducing sulfonic acid groups into aromatic ring-containing polymers are useful, e.g., those using concentrated sulfuric acid or fuming sulfuric acid (see, for example, Non-Patent Document 3), those using chlorosulfuric acid (see, for example, Non-Patent Document 4), and those using acetic anhydride (see, for example, Non-Patent Document 5 and Non-Patent Document 6). The production of the sulfonic acid group-containing aromatic polyarylene ether compounds of the present invention may be carried out by using these reagents and selecting reaction conditions depending on respective polymers. In addition; sulfonating agents disclosed in Patent Document 3 may also be used.

The above-mentioned polymers may also be prepared by using a monomer having acidic functional group as at least one of the monomers to be used in polymerization. For example, in polyimide prepared from aromatic diamine and aromatic tetracarboxylic dianhydride, acidic group-containing polyimide can be obtained by using sulfonic acid group-containing diamine as at least one of the aromatic diamines. In the cases of polybenzoxazole prepared from aromatic diaminediol and aromatic dicarboxylic acid and polybenzothiazole prepared from aromatic diaminedithiol and aromatic dicarboxylic acid, acidic group-containing polybenzoxazole or polybenzothiazole can be obtained by using sulfonic acid group-containing dicarboxylic acid or phosphonic acid group-containing dicarboxylic acid as at least one of the aromatic dicarboxylic acids. Polysulfone, polyethersulfone, polyether ketone and the like prepared from aromatic dihalide and aromatic diol can be prepared by using sulfonic acid group-containing aromatic dihalide or sulfonic acid group-containing diol as at least one of the monomers. In such cases, use of sulfonic acid group-containing dihalide is preferred rather than use of sulfonic acid group-containing diol because the degree of polymerization tends to be higher and the thermal stability of the resulting acidic group-containing polymer becomes higher.

The polymers in the present invention are preferably polyarylene ether compounds such as sulfonic acid group-containing polysulfone, polyether sulfone, polyphenylene oxide, polyphenylene sulfide, polyphenylene sulfide sufone, polyether ketone.

Moreover, among the above-listed polyarylene ether compounds, compounds having cyano groups in the molecule are more preferable. Although much of the detail is still unknown, when a compound having cyano groups in the molecule is contained, a polymer with lower swellability and superior form stability is afforded by virtue of interaction of the cyano groups in comparison to the case of preparing from a compound containing no cyano group.

In the present invention, it is desirable to prepare polyarylene ether by using a 3,3‘-disulfo-4,4’-dichlorodiphenylsulfone derivative and/or a similar compound thereof as a monomer in which a sulfonic acid group has been introduced to an electron-withdrawing aromatic ring. Although the 3,3‘-disulfo-4,4’-dichlorodiphenylsulfone derivative has low polymerizability, the preparation using 2,6-dichlorobenzonitrile and/or a similar compound thereof together with the 3,3’-disulfo-4,4’-dichlorodiphenylsulfone derivative is preferred in the present invention. This gives a polyarylene ether compound with a high degree of polymerization even using a 3,3’-disulfo-4,4’-dichlorodiphenylsulfone derivative.

The sulfonic acid group-containing polyarylene ether compound in the present invention is characterized by including a constituent represented by general formula (2) given below together with a constituent represented by general formula (1) also given below:

[Chem. 3]

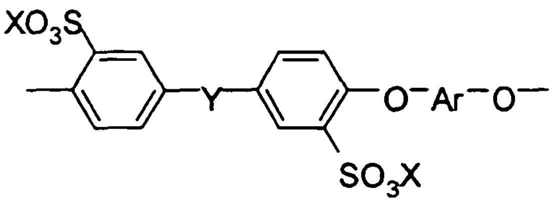 (1)

(in general formula (1), Ar represents a divalent aromatic group, Y represents sulfone group or a ketone group, and X represents H or a monovalent cationic group);

[Chem. 4]

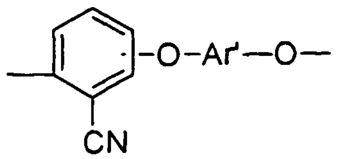 (2)

(in general Ar' represent a divalent aromatic group).

The constituent shown by general formula (2) is desirably a constituent represented by the following chemical formula:

[Chem. 5]

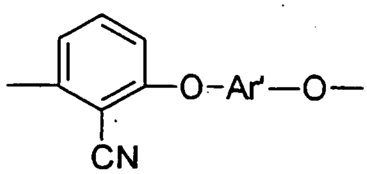

(in the formula, Ar' represents a divalent aromatic group).

Moreover, in the sulfonic acid group-containing polyarylene ether compound in the present invention, structural units other than those represented by the general formulas (1) and (2) may also be included. In such cases, the structural units other than those represented by general formulas (1) and (2) desirably account for 50% by weight or less, more desirably 30% by weight or less of the sulfonic acid group-introduced polyarylene ether in the present invention because it is possible to form an electrolyte membrane utilizing the characteristics of the polyarylene ether compound.

As the sulfonic acid group-containing polyarylene ether compound, the content of the sulfonic acid groups is preferably within the range of from 0.3 to 3.5 meq/g, more preferably within the range of from 1.0 to 3.0 meq/g. If less than 0.3 meq/g, the membrane tends not to show a sufficient ion conductivity in its use as an ion conducting membrane. If greater than 3.5 meq/g, the membrane tends to be unsuited for use because when an ion conducting membrane is placed under high temperature, high humidity conditions, the membrane will be swollen too much. The sulfonic acid group content can determined by the method previously described.

In the polyarylene ether compound in the present invention, it is desirable that the structural units represented by general formula (1) is within the range of from 10 to 80 mole%, more desirably within the range of from 20 to 70 mole% of the whole. If the structural units accounts for less than 10 mole% of the whole, this is undesirable because the proton conductivity tends to be too small. If over 80 mole%, water solubility tends to occur and the swellability tends to be too great.

As the sulfonic acid group-containing polyarylene ether compound in the present invention, one including a constituent represented by general formula (4) given below together with a constituent represented by general formula (3) also given below is particularly preferred. Inclusion of biphenylene structures makes films excellent in dimension

stability at high-temperature, high-humidity conditions and high in toughness.

[Chem. 6]

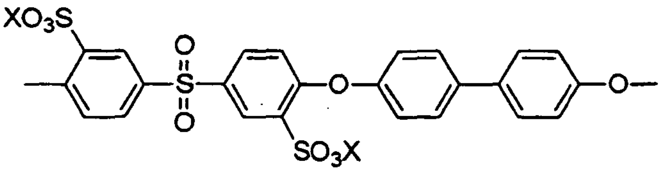

(3)

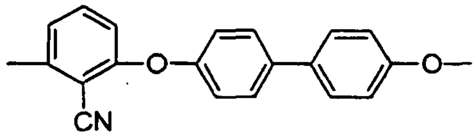

(4)

(In general formula (3), X includes H or a monovalent cation.)

In the polyarylene ether compound composed of the structural units represented by general formulas (3) and (4) in the present invention, it is desirable that the structural units represented by general formula (3) is within the range of from 10 to 80 mole%, more desirably within the range of from 30 to 70 mole% of the whole. If the structural units accounts for less than 10 mole% of the whole, this is undesirable because the proton conductivity tends to be too small. If over 80 mole%, this is undesirable because water solubility tends to occur and the swellability tends to be too great.

The sulfonic acid group-containing polyarylene ether compound in the present invention can be polymerized by an aromatic nucleophilic substitution reaction including compounds represented by the following general formulas (5) and (6) given below. Specific examples of compound represented by general formula (5) include 3,3'-disulfo-4,4'-dichlorodiphenylsulfone, 3,3'-disulfo-4,4'-difluorodiphenylsulphone, 3,3'-disulfo-4,4'-dichlorodiphenyl ketone, 3,3'-disulfo-4,4'-difluorodiphenyl ketone and those in which their sulfonic acid groups forms salts with monovalent cations. The monovalent cations may be, but are not limited to, sodium, potassium and other metallic species and various amines. Examples of the compound represented by general formula (6) include 2,6-dichlorobenzonitrile, 2,6-difluorobenzonitrile, 2,4-dichlorobenzonitrile and 2,4-difluorobenzonitrile.

[Chem. 7]

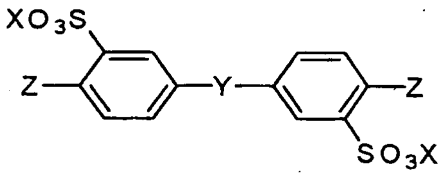

(5)

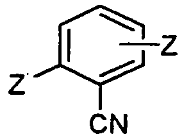

(6)

(In general formula (5), Y represents a sulfone group or a ketone group. X represents a cation. Z represents chlorine or fluorine. In general formula (6), Z represents chlorine or fluorine.)

In the present invention, 2,6-dichlorobenzonitrile and 2,4-dichlorobenzonitrile mentioned above are in an isomeric relationship and use of either one can achieve good ion conductivity, heat resistance, workability and dimensional stability. The reason for this is thought that both monomers are highly reactive and the structure of the whole molecule is rendered harder by forming small repeating units.

In the aromatic nucleophilic substitution reaction, various activated difluoro aromatic compounds and dichloro aromatic compounds may also be used as monomers together with the compounds represented by the general formulas (5) and (6). Examples of such compounds include, but are not limited to, 4,4'-dichlorodiphenylsulfone, 4,4'- difluorodiphenylsulphone, 4,4' - difluorobenzophenone, 4,4'- dichlorobenzophenone and decafluorobiphenyl. Other aromatic dihalogen compounds, aromatic dinitro compounds, aromatic dicyano compounds and the like which are reactive in aromatic

nucleophilic substitution reactions are also available.

The Ar in the constituent represented by general formula (1) and the Ar' in the constituent represented by general formula (2) are generally structures introduced from the aromatic diol component monomers used together with the compounds represented by general formulas (5), (6) in the aromatic nucleophilic substitution polymerization. Examples of such aromatic diol component monomers include 4,4'-bisphenol, bis(4-hydroxyphenyl)sulfone, 1,1-bis(4-hydroxyphenyl)ethane, 2,2-bis(4-hydroxyphenyl)propane, bis(4-hydroxyphenyl)methane, 2,2-bis(4-hydroxyphenyl)butane, 3,3-bis(4-hydroxyphenyl)pentane, 2,2-bis(4-hydroxy-3,5-dimethylphenyl)propane, bis(4-hydroxy-3,5-dimethylphenyl) methane, bis(4-hydroxy-2,5- dimethylphenyl)methane, bis(4-hydroxyphenyl)phenylmethane, bis(4-hydroxyphenyl) diphenylmethane, 9,9-bis(4-hydroxyphenyl)fluorene, 9,9-bis(3-methyl-4-hydroxyphenyl)fluorene, 2,2-bis(4-hydroxyphenyl)hexafluoropropane, hydroquinone, resorcin, 1,6-naphthalene diol, 2,7-naphthalene diol, and bis(4-hydroxyphenyl) ketone. Other various aromatic diols may also be used which can be used for polymerization of polyarylene ether compounds using aromatic nucleophilic substitution reactions. Although these aromatic diols may be used alone, two or more aromatic diols may be used together. Moreover, it is also possible to keep it possible to introduce a crosslinked structure through light irradiation or heat treatment after film formation, for example, by partially copolymerizing monomer components having photoreactivity or thermoreactivity.

In the case of polymerizing the sulfonic acid group-containing polyarylene ether compound in the present invention by an aromatic nucleophilic substitution reaction, it is possible to obtain the polymer by allowing an activated difluoro aromatic compound and/or dichloro aromatic compound including the compounds represented by general formula (5) and general formula (6) to react with an aromatic diol in the presence of a basic compound.

The polymerization can be carried out within the temperature range of from 0 to 400°C. The temperature is preferably from 0 to 350°C, and more preferably from 50 to 250°C. When lower than 0°C, the reaction tends not to proceed sufficiently, whereas when higher than 400°C, decomposition of the polymer tends to occur.

The reaction is preferably carried out in a solvent though it may be carried out in the absence of solvent. Examples of solvents which can be used include, but are not limited to, N-methyl-2-pyrrolidone, N,N-dimethylacetamide, N,N-dimethylformamide, dimethylsulfoxide, diphenylsulphone and sulfolane. Any solvent is available if it can be used as a stable solvent in an aromatic nucleophilic displacement reaction. These organic solvents may be used either alone or as a mixture of two or more of them.

Examples of the basic compound include, but are not limited to, sodium hydroxide, potassium hydroxide, sodium carbonate, potassium carbonate, sodium hydrogencarbonate and potassium hydrogencarbonate. Other ones may be used if they are capable of changing aromatic diols into active phenoxide structures.

In aromatic nucleophilic substitution reactions, water is sometimes formed as a by-product. In such cases, it is also possible to remove the water out of the reaction system as an azeotrope by allowing toluene or the like to coexist in the system regardless of the polymerization solvent. As a technique for removing water out of the system, water absorbents such as molecular sieve may be employed.

In the case of carrying out the aromatic nucleophilic substitution reaction in solvent, it is desirable to charge monomers so that the concentration of a resulting polymer becomes 5-50 % by weight. When less than 5% by weight, the degree of polymerization tends not to readily increase. On the other hand, when more than 50% by weight, the viscosity of the reaction system becomes too high and the post-treatment of the reaction material tends to be difficult. After the completion of the polymerization reaction, the desired polymer is obtained by removing the solvent from the reaction solution by evaporation, and, if needed, washing the residue. Alternatively, it is also possible to obtain the polymer by adding the reaction solution to a solvent such that the polymer shows a low solubility therein, thereby precipitating the polymer as a solid, and then filtering off the precipitate. It is also possible to obtain a desired polymer by removing the solvent from the reaction solution by evaporation and, if needed, washing the residue. In addition, it is also possible to obtain a polymer solution by removing by-product salts by filtering.

The polymer inherent viscosity of the sulfonic acid group-containing polyarylene ether compound in the present invention is preferably 0.1 or more when being determined by dissolving in N-methyl-2-pyrrolidone at a concentration of 0.5 g/dl and measuring using an Ubbelohde's viscometer in a thermostat at 30°C. If the inherent viscosity is less than 0.1, when being formed as an ion conducting membrane, the film tends to be brittle. The reduced specific viscosity is more preferably 0.3 or more. If the reduced specific viscosity exceeds 5, it is undesirable because workability problems will arise, for example, the dissolution of the polymer becomes difficult. As the solvent for use in the measurement of the inherent viscosity, polar organic solvents, such as N-methyl-2-pyrrolidone, may generally be used. However, if the solubility is low, the measurement may be conducted using concentrated sulfuric acid.

The sulfonic acid group-containing polyarylene ether compound in the present invention may be used alone and also may be used in the form of resin composition in combination with another polymer. The electrolyte membranes of the seventh to ninth embodiments in the present invention are each composed of a substantially single compound. However, another resin compound may be blended if mechanical characteristics are not influenced. Examples of such a polymer include, but are not particularly limited to, polyester (polyethylene terephthalate, polybutylene terephthalate, polyethylene naphthalate, etc.), polyamide (nylon 6, nylon 6,6, nylon 6,10, nylon 12, etc.), acrylate-based resin (polymethyl methacrylate, polymethacrylic esters, polymethyl acrylate, polymethacrylic esters, etc.), polyacrylic acid-based resins, polymethacrylic acid-based resins, various polyolefins (polyethylene, polypropylene, polystyrene, diene-based polymers), polyurethane resins, cellulosic resins (cellulose acetate, ethylcellulose, etc.), aromatic polymers (polyarylate, aramid, polycarbonate, polyphenylene sulfide, polyphenylene oxide, polysulfone, polyethersulfone, polyetherether ketone, polyetherimide, polyimide, polyamide-imide, polybenzimidazole, polybenzoxazole, polybenzothiazole, etc.), thermosetting resin (epoxy resin, phenolic resin, novolac resin, benzoxazine resin, etc.). Resin compositions with basic polymers such as polybenzimidazole and polyvinylpyridine are desirable combinations for improvement in polymer dimension property. More desirable compositions are obtained by further introducing sulfonic acid groups to these basic polymers in advance.

When these resin compositions are used in the form of an electrolyte membrane, it is desirable that the polyarylene ether compound in the present invention be included in an amount of not less than 50% by mass but less than 100% by mass, more desirably not less than 70% by mass but less than 100% by mass, even more desirably not less than 80% by mass but less than 100% by mass, and particularly desirably not less than 90% by mass but less than 100% by mass of the whole of each resin composition. When the content of the sulfonic acid group-containing polyarylene ether compound in the present invention is less than 50 % by mass of the whole of a resin composition, the sulfonic acid group concentration in an ion conducting membrane including the resin composition becomes low and there is a tendency that a satisfactory ion conductivity is not obtained. In addition, units including sulfonic acid groups form discontinuous phases and, therefore, the mobility of ions conducted tends to fall.

Resin compositions in the present invention may, if necessary, contain, for example, various additives such as antioxidants, heat stabilizers, lubricants, tackifiers, plasticizers, crosslinking agents, viscosity modifiers, antistatic agents, antibacterial agents, antifoaming agents, dispersing agents, polymerization inhibitors and radical inhibitors, and inorganic or inorganic-organic hybrid compounds for controlling the characteristics of electrolyte membranes. Moreover, electrolyte membranes may contain catalyst particles.

The sulfonic acid group-containing polyarylene ether compounds and the resin compositions in the present invention can be processed into electrolyte membranes by arbitrary methods such as extrusion, rolling and casting. In particular, it is desirable to mold from solutions dissolved in proper solvents. Such solvents may be selected from, but are not limited to, aprotic polar solvents (e.g., N,N-dimethylformamide, N,N-dimethylacetamide, dimethylsulfoxide, N-methyl-2-pyrrolidone and hexamethylphosphoramide) and alcohols (e.g., methanol and ethanol). These solvents may be employed in combination or two or more solvents, if permitted.

The compound concentration in a solution is desirably within the range of from 0.1 to 50% by weight, more desirably within the range of from 5.0 to 40% by weight. If the compound concentration in a solution is less than 0.1% by weight, it tends to be difficult to produce a satisfactory molded article, whereas if over 50% by weight, the workability tends to worsen. For producing a molded article from a solution, conventional method may be used. For example, a molded article can be obtained by removing the solvent by heating, drying under reduced pressure, or immersion in a solvent which is compatible with the solvent dissolving the compound but can not dissolve the compound itself. If the solvent is an organic solvent, it is desirable to evaporate the solvent by heating or drying under reduced pressure. At this time, the solution may also be molded in the form of a composite with another compound as required. Combination with a compound which exhibit similar dissolution behavior is preferred because it allows satisfactory molding. The sulfonic acid groups present in the resulting molded article may include those in the form of salt with a cation, which may, as necessary, be converted into free sulfonic acid groups by acid treatment. In such cases, it is also effective to subject a membrane to immersion treatment in an aqueous solution of sulfuric acid, hydrochloric acid or the like with or without heating.

When producing an electrolyte membrane from a sulfonic acid group-containing polyarylene ether compound in the present invention or its resin composition, the best way is casting from their solution. An ion conducting membrane can be obtained by removing the solvent from the solution cast as described above. Examples of such solutions include solution using organic solvent such as N-methyl-2-pyrrolidone and N,N-dimethylformamide and, in some cases, alcohol. The removal of the solvent is preferred from the viewpoint of homogeneity of the ion conducting membrane. For prevention of decomposition or degradation of the compound or solvent, the drying may also be carried out under reduced pressure at temperatures as low as possible. In the case where the solution is viscous, when the substrate or the solution is heated and the solution is cast at high temperature, the viscosity of the solution is reduced and the solution can be readily cast.

The thickness of the solution when casting the solution is not particularly limited, but it is desirably 2000 μm or less, more desirably 1500 μm or less, even more desirably 1000 μm or less, and optimally 500 μm or less. This is because if the solution is thicker than 2000 μm, an inhomogeneous polymer electrolyte membrane tends to be formed. The thickness of the solution at the time of casting is desirably not less than 10 μm, and more desirably not less than 50 μm. This is because if it is less than 10 μm, it tends to be impossible to maintain the form as an ion conducting membrane.

The cast thickness of the solution can be controlled by use of conventional methods. For example, the thickness

may be rendered uniform by use of an applicator, a doctor blade or the like. Moreover, the thickness may also be controlled by adjusting the amount or concentration of the solution by making the cast area uniform by use of a glass dish or the like. By controlling the rate of removing the solvent from the solution cast, it is possible to form a membrane with a more uniform thickness. When heating the solution, for example, the heating temperature may be set low in an initial stage for reducing the evaporation rate. When immersing in a non-solvent such as water, it is possible to adjust the rate of solidification of the compound by leaving the solution in the air or in inert gas properly.

The electrolyte membrane (ion conducting membrane) in the present invention may have any thickness depending on its application. It, however, is desirable that the thickness be as thin as possible from the viewpoint of ion conductivity. Specifically speaking, it is desirably from 5 to 300 μm, more desirably from 5 to 250 μm, even more desirably from 5 to 200 μm, particularly desirably from 5 to 50 μm, and optimally from 5 to 20 μm. If the thickness of the ion conducting membrane is less than 5 μm, it becomes difficult to handle the ion conducting membrane and short circuit tends to occur when a fuel cell is produced. If the thickness is more than 300 μm, the electric resistance value of the ion conducting membrane becomes high and the power generation performance of fuel cells tends to be deteriorated. The membrane structure of a resulting membrane may, as necessary, be fixed through a post-treatment such as heat treatment and light irradiation.

When preparing an electrolyte membrane of the eleventh embodiment in the present invention, the above-mentioned treatment in a solvent is applied to an ion exchange membrane prepared in the methods previously described.

In the production of an electrolyte membrane or the preparation of a polymer, either acid-form ion exchangeable functional groups or salt-type ion exchangeable functional groups are available.

In the case where heat treatment at a temperature of 150°C or higher is carried out while the functional groups are in their acid form, if the functional groups are in their salt form in the electrolyte membrane prepared as described previously, the functional groups must be converted to acid form prior to the heat treatment. The method of acid conversion is not particularly restricted, but it is desirable to immerse an electrolyte membrane in the salt form into an acidic solution such as aqueous sulfuric acid solution, aqueous hydrochloric acid solution and aqueous phosphoric acid solution to convert it to an electrolyte membrane in the acid form, followed by water rinsing to remove excess acid component. The concentration and temperature of the acidic solution to be used for the conversion to acid form are not particularly restricted and may be adjusted depending of the purpose. There is a tendency that use of an acid with a higher concentration or a solution at a higher temperature results in a higher conversion speed or a higher conversion efficiency into the acid form. As water to be used for water rinsing, water containing cation other than proton may return the electrolyte membrane having been converted to the acid form back to the salt form. Therefore, it must be controlled and may be determined depending on the purpose. It is also possible to dare to force functional groups to remain in the salt form in an arbitrary ratio. It is desirable to apply heat treatment at a temperature of 150°C or higher to the so-prepared acid-form electrolyte membrane.

In the case where heat treatment at a temperature of 200°C or higher is carried out while the functional groups are in their salt form, it is only required that the functional groups are in the salt form at the time of being subjected to the heat treatment. The method for converting one in the acid form to one in the salt form is not particularly restricted and conventional methods may be used. For example, a method including immersion in aqueous sodium chloride solution, aqueous potassium chloride solution or aqueous sodium sulfate solution, followed by water rinsing and drying is a good method. It is desirable to apply heat treatment at a temperature of 200°C or higher (more desirably, 350°C or higher) to the so-prepared salt-form electrolyte membrane.

When the electrolyte membrane prepared in the above-mentioned manner, the sulfonic acid groups in the membrane may include groups forming metal salts, which may be converted to free sulfonic groups through proper acid treatment. In such cases, it is also effective to subject a resulting membrane to immersion treatment in an aqueous solution of sulfuric acid, hydrochloric acid or the like with or without heating.

By producing an electrolyte membrane-electrode assembly using the aforementioned electrolyte membrane which is an ion exchange membrane, it is possible to provide hydrocarbon-based solid polymer fuel cells improved particularly in reliability and durability.

The type of catalysts, the constitution of electrodes, the type of gas diffusion layers to be used for electrodes and the joining method are not particularly restricted and conventional ones may be used. In addition, combinations of conventional technologies are also available. Although the catalyst for use in the electrode may be optionally selected from the viewpoints of acid resistance and catalytic activity, metals of the platinum family and their alloys or oxides are particularly preferred. For example, use of platinum or platinum-based alloy for a cathode and platinum or platinum-based alloy or an alloy of platinum and ruthenium for an anode is suitable for high-efficiency power generation. A plurality of types of catalysts may be used. There may be distribution. Moreover, the vacancy in the electrode, the type and amount of ion conducting resin which is allowed to exist together with the catalyst in the electrode are not particularly restricted. In addition, methods for controlling gas diffusion, typified by impregnation with hydrophobic compounds, are also suitably used. For the technique for joining an electrode to an membrane, it is important not to generate a large resistance between the membrane and the electrode. It is also important to prevent delamination or fall off of an electrolyte

catalyst due to mechanical force caused by swelling and shrinkage of the membrane or gas generation. There are no particular restrictions for the type and amount of the ion exchange polymer contained in the electrode. The polymer may be perfluorosulfonic acid polymer, hydrocarbon-based polymer, or partially fluorinated hydrocarbon-based polymer.

The method for producing an electrolyte membrane-electrode assembly of the present invention is characterized, as.described above, by being a method for producing an electrolyte membrane-electrode assembly by joining a hydrocarbon-based solid polymer electrolyte membrane and a pair of electrodes, wherein the hydrocarbon-based solid polymer electrolyte membrane is joined with the electrodes by hot pressing while the content of water contained in the hydrocarbon-based solid polymer electrolyte membrane is within the range of from 10 to 70% of the maximum water content of the hydrocarbon-based solid polymer electrolyte membrane. It is further desirable to provide the hydrocarbon-based solid polymer electrolyte membrane with moisture by holding the hydrocarbon-based solid polymer electrolyte membrane in an atmosphere where the humidity and/or temperature is controlled. By such a preferable method of the present invention, it is possible to introduce moisture uniformly into a hydrocarbon-based solid polymer electrolyte membrane and it becomes possible to humidify the entire membrane to bring it in a good condition suitable for joining. As a result, it becomes possible to obtain well-joined electrolyte membrane-electrode assemblies with good reproducibility.

In the method for producing an electrolyte membrane-electrode assembly in the present invention, the method for causing a solid polymer electrolyte membrane to contain a specified amount of moisture is not restricted. For example, a method of spraying moisture by use of a spray or the like and a method including holding the solid polymer electrolyte membrane in an atmosphere where the humidity or temperature is controlled are suitably employed. Particularly, the method including holding an because and, as for the method holding a solid polymer electrolyte membrane in an atmosphere where the humidity and temperature are controlled is a method suitable because it can provide the membrane with moisture uniformly and quantitively. By use of this method, it is possible to extremely reduce the low reproducibility or reduce the distribution-in-plane of the moisture distribution in the thickness direction. As a result, it becomes possible to produce, with good reproducibility, excellent electrolyte membrane-electrode assemblies uniform in join condition. This method is superior, for example, to the method of providing a solid polymer electrolyte membrane with moisture by immersing the electrolyte membrane in water or the like, from the viewpoints of controlling the moisture providing ratio and providing the membrane with moisture. In addition, it is also superior to the method of exposing a solid polymer electrolyte membrane to a water vapor atmosphere, for example, under pressure because the electrolyte membrane is not swollen more than is required. The atmosphere where the membrane is humidified is not particularly restricted and may be optionally selected depending on the type and characteristics of the membrane.

In the present invention, it is also possible to provide fuel cells using therein the above-mentioned electrolyte membrane-electrode assemblies. The type of separators to be used in fuel cells, the flow rate, feeding method and structure of flow path of fuel and oxidation gas, operation method, operation conditions, temperature distribution and controlling method of fuel cells are not particularly restricted. The electrolyte membrane in the present invention can withstand its operation at high temperatures because it is superior in heat resistance, workability, ion conductivity and dimensional stability. It can afford fuel cells which can be produced easily and can generate satisfactory power. It is desirable to use the membrane as a fuel cell using methanol directly as fuel.

The present invention is explained with reference to examples below. The invention, however, is not limited to these examples.

Measurements were carried out in the methods described below.

<Dry Weight of Electrolyte Membrane>

The weight obtained by vacuum drying an electrolyte membrane with a size 5 cm × 5 cm in a vacuum dryer at 50°C for six hours, cooling it to room temperature in a desiccator, and then immediately weighing it was used as the dry weight (Wd) of the membrane.

<Water Content of Electrolyte Membrane>

The surface of an electrolyte membrane was wiped lightly with paper wiper KIMWIPE (registered trademark) S-200 manufactured by CRECIA Corp. to remove the water adhering to the membrane surface. Just after that, the membrane was weighed and the weight is indicated by Wi. The water content (Ws) of the electrolyte membrane in a specific moisture condition was calculated from the formula shown below:

$$Ws = (Wi-Wd)/Wd \times 100\ (\%)$$

<Maximum Water Content of Membrane>

First, a sample after the measurement of its dry weight (Wd) was immersed in ultrapure water at 25°C for eight hours under intermittent stirring and then it was picked up. Then, water droplets adhering to the membrane surface were wiped with KIMWIPE Based on the weight (Ww) measured just after the wiping, the maximum water content (Wm) was calculated from the formula shown below:

$$Wm = (Ww-Wd)/Wd \times 100\ (\%)$$

<Glass Transition Temperature>

The glass transition temperature of an ion exchange membrane was measure in the following manner. A 5-mm-wide strip-shaped specimen was set in a dynamic viscoelasticity analyzer manufactured by UBM Co., Ltd. (model: Rheogel-E4000) so that the distance between chucks became 14 mm and the specimen was dried in a dry nitrogen stream for four hours. Then, a peak temperature of tanδ was measured in a tensile mode, at a frequency of 10 Hz and a strain of 0.7% in a nitrogen stream within a measurement temperature range of from 25 to 200°C at a temperature elevation rate of 2°C/min at 2°C measurement steps. The peak temperature was used as the glass transition temperature .

<Conductivity (Ion Conductivity )>

Platinum wires (diameter: 0.2 mm) were pressed against the surface of a 10-mm-wide strip-shaped specimen on a self-made measuring probe (made of polytetrafluoroethylene) and the specimen was held in a thermo-hygrostat oven (Nagano Science Co., Ltd., LH-20-01) under conditions at 80°C and 95% RH. An alternate current impedance between the platinum wires at 10 KHz were measured by a 1250 FREQUENCY RESPONSE ANALYSER manufactured by SOLARTRON. The alternate current impedance was measured while the distance between the electrodes was changed by 10 mm from 10 mm to 40 mm. A conductivity was calculated by canceling, by use of the formula shown below, a contact resistance between the membrane and the platinum wires from a slope of plotted resistance values estimated from the distance between the electrodes and a C-C plot.

$$\text{Conductivity [S/cm]} = 1/\text{membrane width [cm]} \times \text{membrane thickness [cm]} \times \text{slope between resistances } [\Omega/\text{cm}]$$

<Power Generation Evaluation Test (1)>

An electrolyte membrane-electrode assembly was incorporated in a fuel cell for evaluation FC25-02SP manufactured by ElectroChem Inc. To each of the anode and the cathode, hydrogen and air humidified with 75°C ultrapure water were supplied at a cell temperature of 80°C and an operation was carried out at a current density of 0.5 A/cm$^2$. In the measurement, a voltage after an eight-hour continuous operation was read. In addition, the output voltage after the eight-hour operation was defined as the initial characteristic. A continuous operation was carried out under the conditions mentioned above. A time when the open circuit voltage decreased by 0.1 V from the initial value or a time when the residence increased by 10% from the initial value, whichever time is up earlier, was evaluated as an endurance time.

<Power Generation Evaluation Test (2)>

An electrolyte membrane-electrode assembly was incorporated in a fuel cell for evaluation FC25-02SP manufactured by ElectroChem Inc. An operation was carried out at a cell temperature of 40°C while supplying a 2 mol/l aqueous methanol solution (1.5 ml/min) adjusted to 40°C to the anode and highly purified oxygen gas (80 ml/min) adjusted to 40°C to the cathode.

<Power Generation Evaluation Test (3)>

An electrolyte membrane-electrode assembly was incorporated in a fuel cell for evaluation FC25-02SP manufactured by ElectroChem Inc. The voltage was checked when an operation was carried out at a current density of 0.1 A/cm$^2$ at a cell temperature of 60°C while supplying a 5 mol/l aqueous methanol solution adjusted to 60°C to the anode and the.air adjusted to 60°C to the cathode.

<Power Generation Evaluation Test (4)>

An electrolyte membrane-electrode assembly was incorporated in a fuel cell for evaluation FC25-02SP manufactured by ElectroChem Inc. An operation was carried out at a current density of 0.1 A/cm$^2$ at a cell temperature of 40°C while supplying a 3 mol/l aqueous methanol solution at 40°C to the anode and the air adjusted to 40°C to the cathode.

<Power Generation Evaluation Test (5)>

Using the gas diffusion layer with an electrode catalyst layer for a cathode shown in the above power generation evaluation test (4) also for an anode, an electrolyte membrane-electrode assembly was prepared in a similar method. An operation was done and the voltage (V) was measured at a cell temperature of 80°C at a current density of 1 A/cm$^2$ while supplying to each of the anode and the cathode hydrogen gas and oxygen gas humidified at 60°C. In addition, the open circuit voltage was observed every two hours through a long-time operation under the same conditions and the durability was also evaluated by using the time when the open circuit voltage fell by 50 mV in comparison to the initial value as an endurance time.

<Solution Viscosity>

A polymer powder was dissolved in N-methyl-2-pyrrolidone at a concentration of 0.5 g/dl, and the viscosity was measured in a thermostat at 30°C with an Ubbellohde type viscometer. The evaluation was done using an inherent viscosity In[ta/tb]/c) wherein ta represents the fall time of the sample solution, tb represents the fall time in second of only the solvent and c represents the polymer concentration.

<Moisture Absorption>

A film sample whose dry weight had been taken was put in a stopperable glass sample tube and the tube was placed for one hour in a thermo-hygrostat oven (Nagano Science Co., Ltd., LH-20-01) which had been set at 80°C and 95% relative humidity. The tube was stoppered simultaneously with the removal of the sample and was allowed to cool to room temperature. The weight including the sample tube was measured and the moisture absorption amount was determined from the weight increase based on the dry weight. Further, the amount of water molecules ($\lambda$) to the amount of sulfonic acid groups which was set at the time of polymer preparation. (In the case of a polymer resulting from introduction of sulfonic acid groups into a polymer by sulfonation reaction or the like, it may be calculated using the amount of sulfonic acid groups determined by titration.)

<Titration IEC>

The ion exchange capacity (IEC) was measured by weighing a sample dried overnight in nitrogen atmosphere, stirring it together with an aqueous sodium hydroxide solution, and back titrating with an aqueous hydrochloric acid solution.

<IEC (acid form)>

The ion exchange capacity (IEC) was determined through the measurement of the amount of acid-form functional groups present in the ion exchange membrane. First, as sample conditioning, a sample piece (5 cm × 5 cm) was dried for two hours under a nitrogen flow in an oven at 80°C and was allowed to cool for 30 minutes in a desiccator filled with silica gel. Thereafter, the dry weight (Ws) was measured. Subsequently, 200 ml of 1 mol/l sodium chloride solution in ultrapure water and the weighed sample were charged into a 200 ml stopperable glass bottle and stirred at room temperature in sealing condition for 24 hours. After that, 30 ml of the solution was taken out and subjected to neutralization titration using 10 mM aqueous sodium hydroxide solution (commercially available standard solution). On the basis of the titration amount (T), the IEC (acid form) was calculated using the formula shown below:

$$\text{IEC (meq/g)} = 10T/(30Ws) \times 0.2$$

(Unit of T: ml, unit of Ws: g)

The whole ion exchange capacity, which is a measure of the amount of ionic functional groups in a sample, was determined by measuring the above-mentioned ion exchange capacity of an acid-form sample prepared by immersing a sample in 2 mol/l aqueous sulfuric acid solution overnight, washing with ultrapure water repeatedly and drying.

<Water Absorption at 80°C (W80°C)>

A sample cut into a size 3 cm × 3 cm was immersed in 200 ml pure water at 80°C for 4 hours. Then, the sample was removed and immediately sandwiched between filter papers to remove excess water remaining on the surface. The sample was hermetically sealed in a weighing bottle and weighed. Thus, the weight W1 of the sample which had absorbed water was determined. Subsequently, the sample was dried under reduced pressure at 120°C for 2 hours and then hermetically sealed in the weighing bottle. Thus, the weight W2 of the dried sample was determined. From these values, the W80°C was calculated by the following formula:

$$W80°C\ [wt\%] = (W1\ [g] - W2\ [g])/W2\ [g] \times 100$$

<Water Absorption Ratio of 80°C to 25°C (W80°C/W25°C)>

A sample cut into a size 3 cm × 3 cm was immersed in 200 ml pure water at 25°C for 24 hours. Then, the sample was removed and immediately sandwiched between filter papers to remove excess water remaining on the surface. The sample was hermetically sealed in a weighing bottle and weighed. Thus, the weight W3 of the sample which had absorbed water was determined. Subsequently, the sample is dried under reduced pressure at 120°C for 2 hours and then hermetically sealed in a weighing bottle. Thus, the weight W4 of the dried sample is determined. From these values, the W25°C was calculated by the following formula. From the value of W25°C determined in this manner and the value of W80°C determined in the manner mentioned previously, the W80°C/W25°C was calculated.

$$W25°C\ [wt\%] = (W3\ [g] - W4\ [g])/W4\ [g] \times 100$$

<Ratio of Volume at 65% Relative Humidity to Volume in Water at 25°C (V2/V1)>

A sample was cut into a size 3 cmx3 cm in a room at 25°C and 65% relative humidity and the thickness thereof was measured. Thus, the volume V1 was calculated. Subsequently, the sample was immersed in 200 ml of pure water at 25°C for four hours. Then, the sample was picked up and its thickness, width and length were immediately measured. Thus, the volume V2 was calculated. Based on the thus-obtained values, the V2/V1 was calculated.

<Tensile Breaking Strength Measured in Water at 25°C (DT)>

A sample cut in a strip shape was subjected to a tensile test in water at a load of 0.5 kgf, a speed of 20 mm/min, at 25°C by use of a Tensilon UTM3 as a measuring device. From the stress and the thickness of the sample at the time of breaking, the breaking stress was determined. As the thickness of the sample, a value was used which had been determined by measuring the thickness of the sample in 25°C water while varying the load and extrapolatingly determining the thickness when the load was zero.

<Methanol Permeation Rate and Methanol Permeation Coeffcient>

The liquid fuel permeation rate of an ion exchange membrane was measured as a permeation rate of methanol in the following method. An ion exchange membrane with an average thickness of 50 μm (membranes whose average thickness is within the range of from 48 μm to 52 μm are classified as membrane with an average thickness of 50 μm) which had been immersed for 24 hours in 5M aqueous methanol solution adjusted to 25°C (for the preparation of the aqueous methanol solution, commercially available methanol of special reagent grade and ultrapure water (18 MΩ/cm) were used) was sandwiched between H-shaped cells. A 100-ml portion of 5 mol/l aqueous methanol solution was poured into one of the cells and 100 ml of ultrapure water (18 MΩ·cm) was poured into the other cell. The rate was calculated through chromatography measurement of the amount of methanol which diffused into the ultrapure water through the

electrolyte membrane (the area of the ion exchange membrane was 2.0 $cm^2$) while stirring both the cells at 25°C. Specifically, it was calculated on the basis of the methanol concentration change rate [Ct] (mmol/L/s) in the cell containing ultrapure water using the following formulas:

$$\text{Methanol permeation rate } [mmol/m^2/s] = [Ct\ [mmol/L/s] \times 0.1 [L])/2 \times 10\text{-}4\ [m^2]$$

$$\text{Methanol permeation coefficient } [mmol/m/s] = \text{methanol permeation rate } [mmol/m^2/s] \times \text{ film thickness } [m]$$

<Tensile Test>

A tensile test at 20°C and 65% relative humidity and a tensile test at 25°C in water were measured by means of a Tensilon UTMII manufactured by Toyo Baldwin Co. and a Tensilon UTMIII manufactured by Toyo Baldwin Co., respectively, using films which have been cut in a regulated size.

<Thickness of Ion Exchange Membrane>

The thickness of an ion exchange membrane was determined by measurement by use of a micrometer (Mitutoyo Standard Micrometer 0-25mm 0.01mm). For one sample with a size 5 × 5 cm, the thickness was measured at 20 points and the average of the measurements was used as the film thickness. In the measurement, evaluation was carried out in a measurement room where the room temperature and the humidity were controlled to 20°C and 30 ± 5 RH%. Samples which had been allowed to leave in the measurement room for 24 hours or more were used. For one sample with a size 5 × 5 cm, the thickness was measured at 20 points and the average of the measurements was used as the thickness.

<Swelling Ratio>

The swelling ratio was determined using the formula given below, on the basis of the accurate dry weight (Ws) of a sample (5 cm×5 cm) and the weight (W1) obtained by immersing the sample in ultrapure water at 70°C for two hours, removing it, wiping off the excess water present on the sample surface with Kimwipe (commercial name), and immediately weighing.

$$\text{Swelling Ratio } (\%) = (W1\text{-}Ws)/Ws \times 100(\%)$$

<Example 1>

First, an electrolyte membrane was prepared in the manner. 5.2335 g (0.01065 mole) of disodium 3,3'-disulfonate-4,4'-dichlorodiphenylsulfone (abbreviation: S-DCDPS), 2.3323 g (0.013559 mole) of 2,6- dichlorobenzonitrile (abbreviation: DCBN), 4.5086 g (0.02421 mole) of 4,4'-biphenol, 3.8484 g (0.02784 mole) of potassium carbonate and 2.61 g of molecular sieve were weighed out in a 100-ml four-necked flask and nitrogen was flown therein. Following addition of 35 ml of NMP, stirring was carried out at 148°C for one hour and then the reaction temperature was raised to 195-200°C. The reaction was continued about until a full increase in viscosity of the system (for about five hours). After cooling, the molecular sieve which had subsided was removed and a precipitate was formed in strand form in water. The polymer obtained was washed in boiling ultrapure water for one hour and then dried. The polymer showed an inherent viscosity of 1.25. One gram of the polymer was dissolved in 5 ml NMP and was cast in a thickness of about 200 μm on a glass plate placed on a hot plate. After evaporation of NMP until a film was formed, the item was immersed in water overnight or longer. The resulting film was subjected to boiling water treatment for one hour using 2 L of 1 mol/l aqueous sulfuric acid solution to dissociate the salt, followed by one-hour boiling in ultrapure water repeated three times to remove acid components. Then, the film was dried at room temperature while being fixed.

An electrode was prepared in the manner described below. To a 20% Nafion (commercial name) solution (product number: SE-20192) manufactured by Du Pont, catalyst-carrying carbon (carbon: ValcanXC-72 manufactured by Cabot Corp.; platinum carried: 40% by weight) was added so that the catalyst-carrying carbon : Nafion weight ratio became 2.7 : 1, and was stirred to yield a catalyst paste. The catalyst paste was applied to a sheet of water repellent

Carbon Paper TGPH-060 manufactured by Toray Industries, Inc. so that the amount of platinum attaching thereto would become 0.4 mg/cm$^2$ and then dried. Thus, an electrode (a gas diffusion layer with a catalyst layer) was prepared.

Regarding the method for adhering the electrolyte membrane and electrode prepared as described above, an assembly was produced by providing the electrolyte membrane with moisture by lightly spraying ultrapure water uniformly by means of air brush, followed by sandwiching it between the electrode whose catalyst layer faced the electrolyte membrane, and hot pressing at 130°C, 8 MPa for three minutes. The power generation evaluation was carried out by power generation evaluation test (1).

<Example 2>

An electrolyte membrane-electrode assembly was produced in a method the same as that of Example 1 except changing only the amount of water to make contained in the electrolyte membrane.

<Example 3, not according to the invention>

An electrolyte membrane-electrode assembly was produced in a method analogous to that of Example 1 using an electrolyte membrane prepared with a ratio of S-DCDS to DCBP of 23 to 77 in Example 1.

<Example 4>

An electrolyte membrane-electrode assembly was produced in a method analogous to that of Example 1 using an electrolyte membrane prepared with a ratio of S-DCDS to DCBP of 62 to 38 in Example 1.

<Example 5>

After production of an electrolyte membrane-electrode assembly in a method the same as that of Example 1, the peripheral portion of the electrode was sealed with a sealant (TB 1152, manufactured by Three Bond Co., Ltd.).

<Example 6>

An electrolyte membrane-electrode assembly was produced in a method the same as that of Example 1 except that in the humidification of the electrolyte membrane in Example 1 the electrolyte membrane was humidified uniformly by exposing the electrolyte membrane to an environment at 20°C and 90 %RH for 20 hours instead of directly applying moisture by air spray. Eight sets of electrolyte membrane-electrode assemblies were produced and compared. As a result, it was confirmed that the amount of moisture can be controlled with good reproducibility. By humidification by means of air spray carried out in Examples 1-5, it was impossible to control the amount of moisture with good reproducibility. According to the present invention, better durability was exhibited in comparison to the electrolyte membrane-electrode assemblies which were provided with moisture by air spray. This is probably because the join state became uniform due to uniform humidification of the electrolyte membrane.

The compositions of the electrolyte membranes, characteristics of the electrolyte membranes, conditions of join with the electrodes, and characteristics as electrolyte membrane-electrode assemblies are shown in Table 1.

[Table 1]

| | Composition of Electrolyte Membrane | | Characteristics of Electrolyte Membrane | | | Join Condition | | Characteristics of Electrolyte Membrane-Electrode Assembly | | | Remarks |
|---|---|---|---|---|---|---|---|---|---|---|---|
| | S-DCDPS | DCBN | Proton Conductivity [S·cm] | Glass Transition Temperature [°C] | Maximum Water Content [%] | Water Absorption Ratio [%] | Hot Press Condition (Temperature/ Pressure/Time) [°C·MPa·min] | Condition of Electrolyte Membrane-Electrode Assembly | Power Generation Evaluation (1) [V at 0.5A/cm2] | Durability [hr] | |
| Example 1 | 44 | 56 | 0.19 | 200< | 76 | 30 | 130·8·3 | Good | 0.71 | 1530 | |
| Example 2 | 44 | 56 | 0.19 | 200< | 76 | 64 | 130·8·3 | Good (Slight Wrinkles) | 0.72 | 1290 | |
| Example 3 | 23 | 77 | 0.04 | 200< | 23 | 15 | 130·8·3 | Good | 0.48 | 1460 | |
| Example 4 | 62 | 38 | 0.38 | 200< | 118 | 41 | 130·8·3 | Good | 0.73 | 1140 | |
| Example 5 | 44 | 56 | 0.19 | 200< | 76 | 22 | 130·8·3 | Good | 0.7 | 2000< | Sealant was used. |
| Example 6 | 44 | 56 | 0.19 | 200< | 76 | 35 | 130·8·3 | Extremely Good | 0.72 | 1800< | Good in Reproducibility of Water Absorption Rate |

## Claims

1. A method for producing an electrolyte membrane-electrode assembly by joining a hydrocarbon-based solid polymer electrolyte membrane and a pair of electrodes, the electrolyte membrane being formed using a poly(arylene ether)-based compound including a constituent represented by general formula (1) and a constituent represented by general formula (2), wherein the constituent represented by the general formul (1) is within the range of from 10 to 80 mole% of the whole

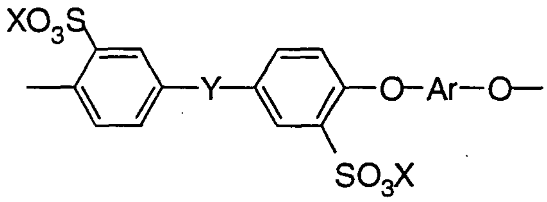

(1)

(in general formula (1), Ar represents a divalent aromatic group, Y represents a sulfone group or a ketone group, and X represents H or a monovalent cationic group);

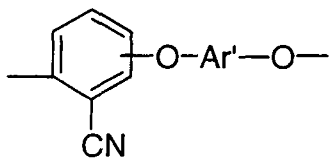

(2)

(in general formula (2), Ar' represents a divalent aromatic group), wherein the glass transition temperature of the electrolyte membrane in a dry state is not lower than 160°C and the maximum water content (Wm) of the electrolyte membrane is within the range of from 70% to 120%, and the maximum water content is calculated from formula:

$$Wm = (Ww-Wd)/Wd \times 100\ (\%)$$

using a weight (Ww) determined by immersing, in 25°C ultrapure water for 8 hours, the membrane after measurement of dry weight (Wd) of the membrane, wiping out water droplets attaching on a membrane surface, and then weighing the membrane, and wherein the hydrocarbon-based solid polymer electrolyte membrane is joined with the electrodes by hot pressing while the content of water contained in the hydrocarbon-based solid polymer electrolyte membrane is within the range of from 10 to 70% of the maximum water content of the hydrocarbon-based solid polymer electrolyte membrane.

2. The method for producing an electrolyte membrane-electrode assembly according to claim 1, wherein the hydrocarbon-based solid polymer electrolyte membrane is provided with moisture through the holding of the hydrocarbon-based solid polymer electrolyte membrane in an atmosphere where the humidity and/or the temperature is controlled.

3. The method for producing an electrolyte membrane-electrode assembly according to claim 1 or 2, wherein the periphery of each of the pair of electrodes is formed of a sealing member.

4. The method for producing an electrolyte membrane-electrode assembly according to any one of claims 1 to 3, wherein the hydrocarbon-based solid polymer electrolyte membrane has an ion exchange capacity (IEC) within the range of from 1.0 to 3.0 meq/g and exhibits a conductivity, measured under an atmosphere at 80°C and 95% relative humidity, of 0.01 S/cm or more, and in which electrolyte membrane the water absorption at 80°C (W80°C), the water absorption at 25°C (W25°C) and the ion exchange capacity (IEC) satisfy the following formula (1):

$$(W80°C/W25°C) \leq (IEC) + 0.05 \quad \text{(formula (1))}$$

W80°C: water absorption (% by weight) at 80°C
W25°C: water absorption (% by weight) at 25°C
IEC: ion exchange capacity (meq/g)

**5.** The method for producing an electrolyte membrane-electrode assembly according to claim 4, wherein the hydrocarbon-based solid polymer electrolyte membrane has a sulfonic acid group content (an ion exchange capacity based on the polymer structure) of 2.0 meq/g or more and which exhibits a moisture absorption ($\lambda$) defined as the number of water molecules per sulfonic acid group under an atmosphere at 80°C and 95% relative humidity of a value less than a relation (sulfonic acid group content)$\times$6 - 2.

**6.** The method for producing an electrolyte membrane-electrode assembly according to claim 4, wherein the hydrocarbon-based solid polymer electrolyte membrane has an ion exchange capacity within the range of from 1.0 to 3.0 meq/g and exhibits a conductivity, measured under an atmosphere at 80°C and 95% relative humidity, of 0.01 S/cm or more and in which the water absorption at 80°C of the electrolyte membrane (W80°C) and the ion exchange capacity satisfy the following formula (2):

$$W80°C < 4.0 \times (IEC)^{5.1} \text{ (formula (2))}$$

W80°C: water absorption (% by weight) at 80°C
IEC: ion exchange capacity (meq/g)

**7.** The method for producing an electrolyte membrane-electrode assembly according to claim 4, wherein the hydrocarbon-based solid polymer electrolyte membrane has an ion exchange capacity within the range of from 1.0 to 3.0 meq/g and exhibits a conductivity, measured under an atmosphere at 80°C and 95% relative humidity, of 0.01 S/cm or more, and in which electrolyte membrane the water absorption at 80°C (W80°C), the water absorption at 25°C (W25°C) and the ion exchange capacity satisfy the following formula (3):

$$(W80°C/W25°C) \leq 1.27 \times (IEC) - 0.78 \text{ (formula (3))}$$

W80°C: water absorption (% by weight) at 80°C
W25°C: water absorption (% by weight) at 25°C
IEC: ion exchange capacity (meq/g)

**8.** The method for producing an electrolyte membrane-electrode assembly according to claim 4, wherein the hydrocarbon-based solid polymer electrolyte membrane has an ion exchange capacity within the range of from 1.0 to 3.0 meq/g and exhibits a conductivity, measured under an atmosphere at 80°C and 95% relative humidity, of 0.01 S/cm or more, and in which electrolyte membrane the volume at 25°C and 65% relative humidity (V1), the volume after immersion in water at 25°C (V2) and the ion exchange capacity satisfy the following formula (4):

$$(V2/V1) \leq 1.05 \times (IEC) - 0.38 \text{ (formula (4))}$$

V1: volume ($cm^3$) at 25°C and 65% relative humidity
V2: volume ($cm^3$) in 25°C water
IEC: ion exchange capacity (meq/g)

**9.** The method for producing an electrolyte membrane-electrode assembly according to claim 4, wherein the hydrocarbon-based solid polymer electrolyte membrane has an ion exchange capacity within the range of from 1.0 to 3.0 meq/g and exhibits a conductivity, measured under an atmosphere at 80°C and 95% relative humidity, of 0.01 S/cm or more and in which the tensile breaking strength (DT) measured in 25°C water and the ion exchange capacity satisfy the following formula (5):

$$DT \geq 135 - 55 \times (IEC) \text{ (formula (5))}$$

DT: tensile breaking strength (MPa)
IEC: ion exchange capacity (meq/g)

**10.** The method for producing an electrolyte membrane-electrode assembly according to claim 9, wherein the hydrocarbon-based solid polymer electrolyte membrane is composed of a single compound and exhibits a tensile strength of 40 MPa or more under an atmosphere at 20°C and 65% relative humidity and also exhibits a tensile strength measured in 25°C water of 30 MPa or more.

**11.** The method for producing an electrolyte membrane-electrode assembly according to claim 9, wherein the hydrocarbon-based solid polymer electrolyte membrane is composed of a single compound and exhibits a tensile strength of 40 MPa or more under an atmosphere at 20°C and 65% relative humidity and which exhibits a difference between the tensile elongation measured in 25°C water and the tensile elongation measured in an atmosphere at 20°C and 65% relative humidity of 150% or less.

**12.** The method for producing an electrolyte membrane-electrode assembly according to claim 9, wherein the hydrocarbon-based solid polymer electrolyte membrane is a non-perfluorocarbon sulfonic acid-based hydrocarbon-based ion exchange membrane for fuel cells using liquid fuel and which electrolyte membrane exhibits a difference of 20% or less between the methanol permeation coefficients measured before and after the immersion of the ion exchange membrane in a 5 mol/l aqueous solution of methanol for 20 hours.

**13.** The method for producing an electrolyte membrane-electrode assembly according to claim 12, wherein the hydrocarbon-based solid polymer electrolyte membrane has been subjected to a treatment of immersion in a solvent at a temperature of 80°C or higher.

## Patentansprüche

**1.** Verfahren zur Herstellung einer Elektrolytmembran-Elektrodenanordnung durch Verbinden einer Kohlenwasserstoff-basierenden Feststoffpolymerelektrolytmembran und einem Paar von Elektroden, wobei die Elektrolytmembran unter Verwendung einer Poly(arylenether)-basierenden Verbindung gebildet wird, welche eine Komponente, dargestellt durch die allgemeine Formel (1), und eine Komponente, dargestellt durch die allgemeine Formel (2), einschließt, wobei die Komponente, dargestellt durch die allgemeine Formel (1), innerhalb des Bereichs von 10 bis 80 Mol% des Ganzen vorliegt:

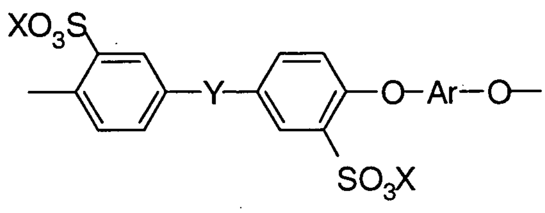

(1)

(in der allgemeinen Formel (1) stellt Ar eine bivalente aromatische Gruppe dar, Y stellt eine Sulfongruppe oder eine Ketongruppe dar, und X stellt H oder eine monovalente kationische Gruppe dar);

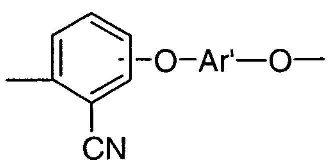

(2)

(in der allgemeinen Formel (2) stellt Ar' eine bivalente aromatische Gruppe dar), wobei die Glasübergangstemperatur der Elektrolytmembran in einem Trockenzustand nicht niedriger als 160°C ist und der maximale Wassergehalt (Wm) der Elektrolytmembran innerhalb des Bereichs von 70% bis 120% liegt, und der maximale Wassergehalt berechnet wird durch die Formel:

$$Wm = (Ww\text{-}Wd)/Wd x 100\ (\%)$$

unter Verwendung eines Gewichts (Ww), bestimmt durch Eintauchen der Membran in 25°C Reinstwasser für 8 Stunden, nach Bestimmung des Trockengewichts (Wd) der Membran, Abwischen von Wassertropfen, die auf einer Membranoberfläche haften, und anschließendem Wiegen der Membran, und wobei die Kohlenwasserstoff-basierende Feststoffpolymerelektrolytmembran mit den Elektroden durch Heißpressen verbunden wird, während der Gehalt an Wasser, enthalten in der Kohlenwasserstoff-basierenden Feststoffpolymerelektrolytmembran, innerhalb des Bereichs von 10 bis 70% des maximalen Wassergehalts der Kohlenwasserstoff-basierenden Feststoffpolymerelektrolytmembran liegt.

2. Verfahren zur Herstellung einer Elektrolytmembran-Elektrodenanordnung nach Anspruch 1, wobei die Kohlenwasserstoff-basierende Feststoffpolymerelektrolytmembran durch das Halten der Kohlenwasserstoff-basierenden Feststoffpolymerelektrolytmembran in einer Atmosphäre, in der die Luftfeuchtigkeit und/oder die Temperatur geregelt wird, mit Feuchtigkeit bereitgestellt wird.

3. Verfahren zur Herstellung einer Elektrolytmembran-Elektrodenanordnung nach Anspruch 1 oder 2, wobei die Peripherie von jeder Elektrode des Elektrodenpaars durch ein Dichtungselement gebildet wird.

4. Verfahren zur Herstellung einer Elektrolytmembran-Elektrodenanordnung nach einem der Ansprüche 1 bis 3, wobei die Kohlenwasserstoff-basierende Feststoffpolymerelektrolytmembran eine Ionenaustauscherkapazität (IEC) innerhalb des Bereichs von 1,0 bis 3,0 meq/g aufweist und eine Leitfähigkeit, gemessen unter einer Atmosphäre bei 80°C und 95% relativer Luftfeuchtigkeit, von 0,01 S/cm oder mehr aufzeigt und in welcher Elektrolytmembran die Wasserabsorption bei 80°C (W80°C), die Wasserabsorption bei 25°C (W25°C) und die Ionenaustauscherkapazität (IEC) die nachstehende Formel (1) erfüllen:

$$(W80°C/W25°C) \leq (IEC) + 0{,}05 \qquad \text{(Formel (1))}$$

W80°C: Wasserabsorption (Gewichts-%) bei 80°C
W25°C: Wasserabsorption (Gewichts-%) bei 25°C
IEC: Ionenaustauscherkapazität (meq/g)

5. Verfahren zur Herstellung einer Elektrolytmembran-Elektrodenanordnung nach Anspruch 4, wobei die Kohlenwasserstoff-basierende Feststoffpolymerelektrolytmembran einen Sulfonsäuregruppegehalt (eine Ionenaustauscherkapazität basierend auf der Polymerstruktur) von 2,0 meq/g oder mehr aufweist und welche eine Feuchtigkeitsabsorption ($\lambda$), definiert als die Anzahl an Wassermolekülen pro Sulfonsäuregruppe, unter einer Atmosphäre bei 80°C und 95% relativer Luftfeuchtigkeit von einem geringeren Wert als eine Beziehung (Sulfonsäuregruppegehalt)x6 - 2 aufzeigt.

6. Verfahren zur Herstellung einer Elektrolytmembran-Elektrodenanordnung nach Anspruch 4, wobei die Kohlenwasserstoff-basierende Feststoffpolymerelektrolytmembran eine Ionenaustauscherkapazität innerhalb des Bereichs von 1,0 bis 3,0 meq/g aufweist und eine Leitfähigkeit, gemessen unter einer Atmosphäre bei 80°C und 95% relativer Luftfeuchtigkeit, von 0,01 S/cm oder mehr aufzeigt und in welcher die Wasserabsorption bei 80°C der Elektrolytmembran (W80°C) und die Ionenaustauscherkapazität die nachstehende Formel (2) erfüllen:

$$W80°C < 4{,}0x(IEC)^{5{,}1} \qquad \text{(Formel (2))}$$

W80°C: Wasserabsorption (Gewichts-%) bei 80°C

IEC: Ionenaustauscherkapazität (meq/g)

**7.** Verfahren zur Herstellung einer Elektrolytmembran-Elektrodenanordnung nach Anspruch 4, wobei die Kohlenwasserstoff-basierende Feststoffpolymerelektrolytmembran eine Ionenaustauscherkapazität innerhalb des Bereichs von 1,0 bis 3,0 meq/g aufweist und eine Leitfähigkeit, gemessen unter einer Atmosphäre bei 80°C und 95% relativer Luftfeuchtigkeit, von 0,01 S/cm oder mehr aufzeigt und in welcher Elektrolytmembran die Wasserabsorption bei 80°C (W80°C), die Wasserabsorption bei 25°C (W25°C) und die Ionenaustauscherkapazität die nachstehende Formel (3) erfüllen:

$$(W80°C/W25°C) \leq 1{,}27x(IEC) - 0{,}78 \qquad (Formel (3))$$

W80°C: Wasserabsorption (Gewichts-%) bei 80°C
W25°C: Wasserabsorption (Gewichts-%) bei 25°C
IEC: Ionenaustauscherkapazität (meq/g)

**8.** Verfahren zur Herstellung einer Elektrolytmembran-Elektrodenanordnung nach Anspruch 4, wobei die Kohlenwasserstoff-basierende Feststoffpolymerelektrolytmembran eine Ionenaustauscherkapazität innerhalb des Bereichs von 1,0 bis 3,0 meq/g aufweist und eine Leitfähigkeit, gemessen unter einer Atmosphäre bei 80°C und 95% relativer Luftfeuchtigkeit, von 0,01 S/cm oder mehr aufzeigt und in welcher Elektrolytmembran das Volumen bei 25°C und 65% relativer Luftfeuchtigkeit (V1), das Volumen nach dem Eintauchen in Wasser bei 25°C (V2) und die Ionenaustauscherkapazität die nachstehende Formel (4) erfüllen:

$$(V2/V1) \leq 1{,}05x(IEC) - 0{,}38 \qquad (Formel (4))$$

V1: Volumen ($cm^3$) bei 25°C und 65% relativer Luftfeuchtigkeit
V2: Volumen ($cm^3$) in 25°C Wasser
IEC: Ionenaustauscherkapazität (meq/g)

**9.** Verfahren zur Herstellung einer Elektrolytmembran-Elektrodenanordnung nach Anspruch 4, wobei die Kohlenwasserstoff-basierende Feststoffpolymerelektrolytmembran eine Ionenaustauscherkapazität innerhalb des Bereichs von 1,0 bis 3,0 meq/g aufweist und eine Leitfähigkeit, gemessen unter einer Atmosphäre bei 80°C und 95% relativer Luftfeuchtigkeit, von 0,01 S/cm oder mehr aufzeigt und in welcher die Reißfestigkeit (DT), gemessen in 25°C Wasser, und die Ionenaustauscherkapazität die nachstehende Formel (5) erfüllen:

$$DT \geq 135 - 55x(IEC) \qquad (Formel (5))$$

DT: Reißfestigkeit (MPa)
IEC: Ionenaustauscherkapazität (meq/g)

**10.** Verfahren zur Herstellung einer Elektrolytmembran-Elektrodenanordnung nach Anspruch 9, wobei die Kohlenwasserstoff-basierende Feststoffpolymerelektrolytmembran aus einer Einzelverbindung zusammengesetzt ist und eine Zugfestigkeit von 40 MPa oder mehr unter einer Atmosphäre bei 20°C und 65% relativer Luftfeuchtigkeit aufzeigt und auch eine Zugfestigkeit, gemessen in 25°C Wasser, von 30 MPa oder mehr aufzeigt.

**11.** Verfahren zur Herstellung einer Elektrolytmembran-Elektrodenanordnung nach Anspruch 9, wobei die Kohlenwasserstoff-basierende Feststoffpolymerelektrolytmembran aus einer Einzelverbindung zusammengesetzt ist und eine Zugfestigkeit von 40 MPa oder mehr unter einer Atmosphäre bei 20°C und 65% relativer Luftfeuchtigkeit aufzeigt und welche einen Unterschied zwischen der Zugdehnung, gemessen in 25°C Wasser, und der Zugdehnung, gemessen in einer Atmosphäre bei 20°C und 65% relativer Luftfeuchtigkeit von 150% oder weniger aufzeigt.

**12.** Verfahren zur Herstellung einer Elektrolytmembran-Elektrodenanordnung nach Anspruch 9, wobei die Kohlenwasserstoff-basierende Feststoffpolymerelektrolytmembran eine Nicht-Perfluorcarbonsulfonsäure-basierende Kohlenwasserstoff-basierende Ionenaustauschermembran für Brennstoffzellen, die flüssigen Brennstoff verwendet, ist und welche Elektrolytmembran einen Unterschied von 20% oder weniger zwischen den Methanolpermeationskoeffizienten, gemessen vor und nach der Eintauchung der Ionenaustauschermembran in eine 5 mol/l wässrigen Lösung von Methanol für 20 Stunden, aufzeigt.

**13.** Verfahren zur Herstellung einer Elektrolytmembran-Elektrodenanordnung nach Anspruch 12, wobei die Kohlenwasserstoff-basierende Feststoffpolymerelektrolytmembran einer Behandlung des Eintauchens in einem Lösungsmittel bei einer Temperatur von 80°C oder höher unterzogen worden ist.

## Revendications

**1.** Une méthode de production d'un ensemble électrode-membrane d'un électrolyte en joignant une membrane en polymère solide à base d'hydrocarbures d'un électrolyte et une paire d'électrodes, la membrane de l'électrolyte était formée au moyen d'un composé à base de poly(arylène éther) comprenant un élément constitutif représenté par la formule générale (1) et un élément constitutif représenté par la formule générale (2), dans laquelle l'élément constitutif représenté par la formule générale (1) est dans la gamme de 10 à 80 mol% de l'ensemble :

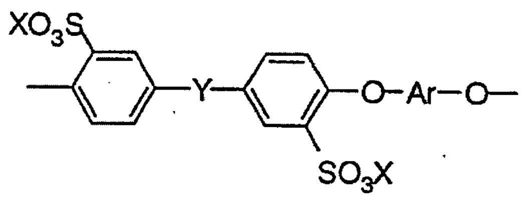

(1)

(dans la formule générale (1), Ar représente un groupe aromatique divalent, Y représente un groupe sulfone ou un groupe cétone, et X représente H ou un groupe cationique monovalent) ;

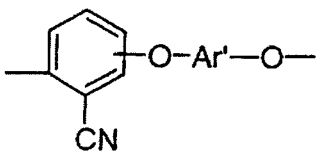

(2)

(dans la formule générale (2), Ar' représente un groupe aromatique divalent, dans laquelle la température de transition vitreuse de la membrane de l'électrolyte dans un état sec n'est pas inférieure à 160°C et la teneur maximale en eau (Wm) de la membrane de l'électrolyte est dans la gamme de 70% à 120%, et la teneur maximale en eau est calculée à partir de la formule :

$$Wm = (Ww-Wd)/Wd \times 100\ (\%)$$

au moyen d'un poids (Ww) déterminé en immergeant, pendant 8 heures dans une eau ultrapure à 25°C, la membrane après avoir mesuré le poids à sec (Wd) de la membrane, essuyé les gouttelettes présentes sur la surface de la membrane, puis pesé la membrane, et dans laquelle la membrane en polymère solide à base d'hydrocarbures de l'électrolyte est jointe aux électrodes par pressage à chaud tandis que la teneur en eau contenue dans la membrane en polymère solide à base d'hydrocarbures de l'électrolyte est dans la gamme de 10 à 70% de la teneur maximale en eau de la membrane en polymère solide à base d'hydrocarbures de l'électrolyte.

**2.** La méthode de production d'un ensemble électrode-membrane d'un électrolyte selon la revendication 1, dans laquelle la membrane en polymère solide à base d'hydrocarbures de l'électrolyte est pourvue d'humidité grâce au maintien de la membrane en polymère solide à base d'hydrocarbures de l'électrolyte dans une atmosphère où l'humidité et/ou la température est contrôlée.

3. La méthode de production d'un ensemble électrode-membrane d'un électrolyte selon la revendication 1 ou 2, dans laquelle la périphérie de chacune de la paire d'électrodes est formée d'un élément de scellage.

4. La méthode de production d'un ensemble électrode-membrane d'un électrolyte selon l'une quelconque des revendications 1 à 3, dans laquelle la membrane en polymère solide à base d'hydrocarbures de l'électrolyte a une capacité d'échange d'ions (IEC) dans la gamme de 1,0 à 3,0 meq/g et présente une conductivité, mesurée sous une atmosphère à 80°C et à 95% d'humidité relative, de 0,01 S/cm ou plus, et dans laquelle membrane de l'électrolyte l'absorption d'eau à 80°C (W80°C), l'absorption d'eau à 25°C (W25°C) et la capacité d'échange d'ions (IEC) satisfont à la formule suivante (1) :

$$(W80°C/W25°C) \leq (IEC) + 0,05 \text{ (formule (1))}$$

W80°C : absorption d'eau (% en poids) à 80°C
W25°C : absorption d'eau (% en poids) à 25°C
IEC : capacité d'échange d'ions (meq/g)

5. La méthode de production d'un ensemble électrode-membrane d'un électrolyte selon l'une quelconque des revendications 1 à 3, dans laquelle la membrane en polymère solide à base d'hydrocarbures de l'électrolyte a une teneur en groupes acide sulfonique (une capacité d'échange d'ions basée sur la structure du polymère) de 2,0 meq/g ou plus et qui présente une absorption d'humidité (À) définie comme étant le nombre de molécules d'eau par groupe sous une atmosphère à 80°C et 95% d'humidité relative d'une valeur inférieure à une relation (teneur en groupe acide sulfonique)x6 - 2.

6. La méthode de production d'un ensemble électrode-membrane d'un électrolyte selon la revendication 4, dans laquelle la membrane en polymère solide à base d'hydrocarbures de l'électrolyte a une capacité d'échange d'ions dans la gamme de 1,0 à 3,0 meq/g et présente une conductivité, mesurée sous une atmosphère à 80°C et à 95% d'humidité relative, de 0,01 S/cm ou plus, et dans laquelle membrane de l'électrolyte l'absorption d'eau à 80°C (W80°C), l'absorption d'eau à 25°C (W25°C) et la capacité d'échange d'ions (IEC) satisfont à la formule suivante (2) :

$$W80°C < 4,0x(IEC)^{5,1} \text{ (formule (2))}$$

W80°C : absorption d'eau (% en poids) à 80°C
IEC : capacité d'échange d'ions (meq/g)

7. La méthode de production d'un ensemble électrode-membrane d'un électrolyte selon la revendication 4, dans laquelle la membrane en polymère solide à base d'hydrocarbures de l'électrolyte a une capacité d'échange d'ions dans la gamme de 1,0 à 3,0 meq/g et présente une conductivité, mesurée sous une atmosphère à 80°C et à 95% d'humidité relative, de 0,01 S/cm ou plus, et dans laquelle membrane de l'électrolyte l'absorption d'eau à 80°C (W80°C), l'absorption d'eau à 25°C (W25°C) et la capacité d'échange d'ions (IEC) satisfont à la formule suivante (3) :

$$(W80°C/W25°C) \leq 1,27x(IEC) - 0,78 \text{ (formule (3))}$$

W80°C : absorption d'eau (% en poids) à 80°C
W25°C : absorption d'eau (% en poids) à 25°C
IEC : capacité d'échange d'ions (meq/g)

8. La méthode de production d'un ensemble électrode-membrane d'un électrolyte selon la revendication 4, dans laquelle la membrane en polymère solide à base d'hydrocarbures de l'électrolyte a une capacité d'échange d'ions dans la gamme de 1,0 à 3,0 meq/g et présente une conductivité, mesurée sous une atmosphère à 80°C et à 95% d'humidité relative, de 0,01 S/cm ou plus, et dans laquelle membrane de l'électrolyte le volume à 25°C et à 65% d'humidité relative (V1), le volume après immersion dans de l'eau à 25°C (V2) et la capacité d'échange d'ions (IEC) satisfont à la formule suivante (4) :

$$(V2/V1) \leq 1{,}05x(IEC) - 0{,}38 \quad \text{(formule (4))}$$

V1 : volume ($cm^3$) à 25°C et à 65% d'humidité relative
V2 : volume ($cm^3$) dans de l'eau à 25°C
IEC : capacité d'échange d'ions (meq/g)

**9.** La méthode de production d'un ensemble électrode-membrane d'un électrolyte selon la revendication 4, dans laquelle la membrane en polymère solide à base d'hydrocarbures de l'électrolyte a une capacité d'échange d'ions dans la gamme de 1,0 à 3,0 meq/g et présente une conductivité, mesurée sous une atmosphère à 80°C et à 95% d'humidité relative, de 0,01 S/cm ou plus et dans laquelle la force de rupture à la tension (DT) mesurée dans de l'eau à 25°C et la capacité d'échange d'ions (IEC) satisfont à la formule suivante (5) :

$$DT \geq 135 - 55x(IEC) \quad \text{(formule (5))}$$

DT : force de rupture à la tension (MPa)
IEC : capacité d'échange d'ions (meq/g)

**10.** La méthode de production d'un ensemble électrode-membrane d'un électrolyte selon la revendication 9, dans laquelle la membrane en polymère solide à base d'hydrocarbures de l'électrolyte est composée d'un unique composé et présente une résistance à la tension de 40 MPa ou plus sous une atmosphère à 20°C et à 65% d'humidité relative et présente également une résistance à la traction mesurée dans de l'eau à 25°C de 30 MPa ou plus.

**11.** La méthode de production d'un ensemble électrode-membrane d'un électrolyte selon la revendication 9, dans laquelle la membrane en polymère solide à base d'hydrocarbures de l'électrolyte est composée d'un unique composé et présente une résistance à la tension de 40 MPa ou plus sous une atmosphère à 20°C et à 65% d'humidité relative et qui présente une différence entre l'allongement à la traction mesuré dans de l'eau à 25°C et l'allongement à la traction mesuré dans une atmosphère à 20°C et à 65% d'humidité relative de 150% ou moins.

**12.** La méthode de production d'un ensemble électrode-membrane d'un électrolyte selon la revendication 9, dans laquelle la membrane en polymère solide à base d'hydrocarbures de l'électrolyte est une membrane à échange d'ions à base d'hydrocarbures à base d'acide sulfonique sans hydrocarbures perfluorés pour piles à combustible utilisant un combustible liquide et laquelle membrane de l'électrolyte présente une différence de 20% ou moins entre les coefficients de perméation de méthanol mesurés avant et après l'immersion de la membrane à échanges d'ions dans une solution aqueuse à 5 mol/l de méthanol pendant 20 heures.

**13.** La méthode de production d'un ensemble électrode-membrane d'un électrolyte selon la revendication 12, dans laquelle la membrane en polymère solide à base d'hydrocarbures de l'électrolyte a été soumise à un traitement d'immersion dans un solvant à une température de 80°C ou supérieure.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6093114 A
- US 20020091225 A
- JP 2884189 B
- JP 2003217343 A
- JP 2003217342 A
- SE 20192


### Non-patent literature cited in the description


- **R. Nolte.** *Journal of Membrane Science,* 1993, vol. 83, 211-220
- **S.M.J. Zaidi.** *Journal of Membrane Science,* 2000, vol. 173, 17-34
- **T. Kobayashi.** *Solid State Ionics,* 1998, vol. 106, 219
- **J. Lee.** *Journal of Polymer Science: Polymer Chemistry Edition,* 1984, vol. 22, 295
- **B.C. Johnson.** *Journal of Polymer Science: Polymer Chemistry Edition,* 1984, vol. 22, 721
- **T. Ogawa.** *Journal of Polymer Science: Polymer Chemistry Edition,* 1984, vol. 23
- **B.S. Pivovar.** *AIChE Fuel Cell Technology: Opportunities and Challenges,* 2002, 535
- **M. Hickner.** *The Electrochemical Society 203rd Meeting-Paris, Abs.,* 2003
- **J. Mecham.** *ACS Polymer Preprints,* 2000, vol. 41 (2), 1388-1389